# EUROPEAN PATENT SPECIFICATION

(11) **EP 4 255 188 B1**
(45) Date of publication and mention of the grant of the patent: **02.12.2026**
(21) Application number: 21816467.1
(22) Date of filing: 29.11.2021
(51) Int. Cl.: A01N 47/36, A01N 57/12, A01P 13/02

(54) **COMPOSITIONS COMPRISING MESOSULFURON-METHYL AND TEHP**
ZUSAMMENSETZUNGEN ENTHALTEND MESOSULFURON-METHYL UND TEHP
COMPOSITIONS COMPRENANT DU MESOSULFURON-MÉTHYLE ET DU TEHP

(30) Priority: 01.12.2020 EP 20211007
(43) Date of publication of application: 11.10.2023
(73) Proprietor: Bayer Aktiengesellschaft, 51373 Leverkusen (DE)
(72) Inventor: RATSCHINSKI, Arno, 40627 Düsseldorf (DE); MARTELLETTI, Arianna, 65843 Sulzbach im Taunus (DE); MENNE, Hubert, 55252 Mainz-Kastel (DE); PEREZ CATALAN, Julio, 40595 Düsseldorf (DE)
(74) Representative: BIP Patents
(86) International application number: PCT/EP2021/083411
(87) International publication number: WO 2022/117516

(56) References cited:
- WO-A1-2010/122313
- WO-A1-2013/087395

## Description

The present invention is in the technical field of crop protection and primarily relates to certain herbicidally active compositions comprising mesosulfuron-methyl and tris(2-ethylhexyl) phosphate (TEHP) which can be employed against harmful plants, for example in fields of crop plants. The invention also relates to corresponding methods and uses of these compositions.

The efficacy of these herbicides against harmful plants in the crop plants is at a high level, but depends in general on the application rate, the formulation in question, the harmful plants or spectrum of harmful plants to be controlled, the crop, the climatic conditions, and the like. In some cases, in order to improve the herbicide selectivity in certain crops, one or more safeners are useful or even necessary. In general, however, there remains a need for compositions and methods to achieve the herbicidal action with low application rate of active compounds. Not only does a lower application rate reduce the amount of an active compound required for application, but, as a rule, it also reduces the amount of formulation auxiliaries required. It both reduces the economic input and improves the ecological compatibility of the herbicide treatment.

WO 95/10507 discloses mesosulfuron, its esters and salts thereof, and their use as herbicides and/or plant growth regulators.

WO 98/24320 relates to herbicidal products comprising mesosulfuron, its esters and salts thereof as well as one or more further herbicides.

WO 03/073854 and WO 2015/01881 teach certain ternary combinations of the sulfonylurea herbicides mesosulfuron, iodosulfuron and further herbicides.

WO 00/56146 and WO 01/47356 disclose surfactant-solvent systems with certain types of phosphates as solvent for the preparation of compositions comprising one or more herbicidally active ingredients.

WO 2006/034817 relates to agrochemical compositions containing phosphoric acid esters having a least one branched alkyl group.

WO 2008/074406 mentions a method using tri(butoxyethyl) phosphate (TBEP) for enhancing the penetration of an active ingredient from the group of herbicides and/or safeners.

WO 2009/100846 teaches herbicidal agrochemical compositions containing specific herbicide combinations and certain phosphoric acid esters suitable for controlling unwanted vegetation in sugar beet crops.

WO 2008/049618, WO 2008/092615 and WO 2012/152527 each disclose compositions based on pinoxaden and certain adjuvants, optionally comprising further ingredients like safeners or a co-herbicide.

WO 2010/122313 concerns alcohol alkoxylates as adjuvants for agrochemical formulations, *inter alia* reporting the herbicidal effects of pinoxaden or nicosulfuron in the presence of said alcohol alkoxylates in comparison to the known adjuvants like tris(2-ethylhexyl) phosphate (TEHP).

WO 2013/087395 relates to the use of aromatic phosphate esters as adjuvants in agrochemical formulations.

WO 2014/060557 relates to certain liquid herbicidal compositions comprising a C₁-C₆ alkyl methacrylate polymeric thickener and a solvent system comprising certain alcohol solvents and a heavy aromatic hydrocarbon solvent. Preferably, the compositions disclosed in WO 2014/060557 comprise a built-in phosphate and/or phosphonate adjuvant.

One possibility of improving the application profile of a herbicide can be combining the herbicidally active compound with one or more other active compounds and/or with one or more adjuvants capable of improving the properties of the herbicidally active compound, such as biological, chemical and/or physical properties.

However, the combined use of a plurality of compounds may cause phenomena of physical and biological incompatibility. What is desired are combinations of compounds or or compositions thereof having an advantageous activity profile, high stability and, if possible, an improved herbicidal action.

Surprisingly, it has now been found that certain compositions comprising mesosulfuron-methyl and tris(2-ethylhexyl) phosphate (TEHP) act together in a particularly advantageous manner, for example when they are employed in crop plants which are suitable for the selective use thereof, if appropriate with addition of safeners.

The invention therefore provides a herbicide concentrate composition (hereinafter for brevitiy also referred to as "composition") comprising an herbicidally effective amount of constituent (A), wherein
(A) denotes mesosulfuron-methyl of formula (I) and/or a salt thereof 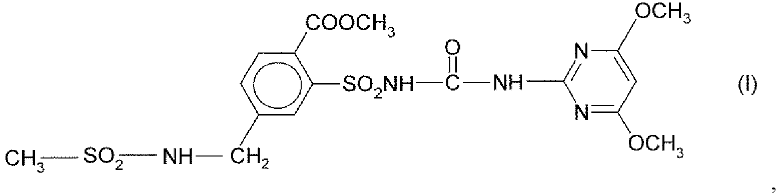
(B) denotes tris(2-ethylhexyl) phosphate (TEHP),
   and preferably one or more further constituents selected from the group consisting of constituent (C) and constituent (D):
(C) one or more further herbicides selected from the group consisting of
   (C1) iodosulfuron-methyl and salts thereof, (C2) thiencarbazone-methyl and salts thereof, (C3) amidosulfuron and salts thereof, (C4) foramsulfuron and salts thereof, (C5) propoxycarbazone and salts thereof, and (C6) diflufenican,
(D) one or more safeners,
   wherein the ratio by weight of the total amount of constituent (A) to the total amount of constituent (B) is in the range of from 1 : 2 to 1 : 100, based on the total weight of the composition, and wherein the composition comprises constituent (A) in a total amount of from 0.5% to 5% by weight, constituent (B) in a total amount of from 10% to 50% by weight, methyl cis-9-octadecenoate (methyl oleate) in a total amount of from 10% to 50% by weight, surfactants in a total amount of at least 3% by weight, and preferably one, two, three or more further constituents selected from the group consisting of other herbicides (constituent (C)), preferably in a total amount of from 0.5% to 12% by weight, safeners (constituent D)), preferably in a total amount of from 0.75% to 15% by weight, water (constituent (F)), preferably in a total amount of from 0.1% to 30% by weight, other formulation adjuvants (constituent (H)), preferably in a total amount of from 0.1% to 50% by weight, in each case based on the total weight of the composition.

Herbicidal compositions comprising sulfonyl urea herbicides like mesosulfuron-methyl and/or a salt thereof are often combined with an adjuvant in the spray tank, said adjuvant resulting in an improved performance, in particular improved biological performance, of the spray solution in comparison to a spray solution without the presence of said adjuvant. The adjuvants typically used together with mesosulfuron-methyl and/or a salt thereof in a tank-mix are vegetable oils or methyl esters thereof (such as rapeseed oil methyl ester, Mero) or one or more alkali metal laurylether sulfates (such as sodium laurylether sulfates, commercially e.g. available as BioPower^{®}).

It has now been found that similar improvements for the performance of mesosulfuron-methyl and/or a salt thereof are obtainable when using tris(2-ethylhexyl) phosphate (TEHP) instead of these adjuvants. Also, it has been found that the amount of TEHP necessary for achieving said improvements are for example much lower compared to vegetable oils or methyl esters thereof. While the amount of adjuvant (for example rapeseed oil methyl ester) in such cases typically is about 1 kg or 2 kg per hectare, the suitable amount of TEHP can be as low as 100 g per hectare (100 g/ha).

Also, the effects observed with tris(2-ethylhexyl) phosphate (TEHP) were superior in comparison to the effects achieved with the structurally similar adjuvant tri(butoxyethyl) phosphate (TBEP) at the same application rate.

Moreover, it was found that the amount of TEHP used should not exceed a certain level or concentration in the spray mixture as these result in distinct and undesired phytotoxic effects of the TEHP adjuvant on crop plants. In own experiments when using 2 kg of TEHP per hectare, significant phytotoxic effects were observed in crop plants such as wheat (e.g. soft wheat (winter) TRZAW), i.e. the crop plant damage resulting from TEHP in combination with mesosulfuron-methyl and/or a salt thereof were found to be too high and not acceptable.

The compositions of the present invention preferably are free of (i.e. do not contain) pinoxaden and preferably are free of a C₁-C₆ alkyl methacrylate.

In the herbicide concentrate compositiona of the present invention preferably the constituents (A) and (C) are the only herbicides present in said compositions, i.e. the herbicide concentrate compositions of the present invention preferably do not contain any herbicides other than those defined as constituents (A) and (C).

In the herbicide concentrate compositions of the present invention preferably the ratio by weight of the total amount of constituent (A) to the total amount of constituent (B) is in the range of from 1 : 3 to 1: 100, more preferably in the range of from 1 : 4 to 1 : 100, even more preferably in the range of from 1 : 4 to 1 : 80, in each case based on the total weight of the composition.

In the herbicide concentrate compositions of the present invention preferably the ratio by weight of the total amount of constituent (A) to the total amount of constituent (B) is in the range of from 1: 4 to 1: 60, more preferably in the range of from 1 : 4 to 1 : 50, and even more preferably in the range of from 1 : 4 to 1 : 40 , or in the range of from 1 : 5 to 1 : 30, in each case based on the total weight of the composition.

In the herbicide concentrate compositions of the present invention preferably constituent (A)is present in a total amount of from 1% to 5% by weight, more preferably in a total amount of from 2% to 4.5% by weight, in each case based on the total weight of the composition.

In the herbicide concentrate compositions of the present invention preferably constituent (B) is present in a total amount of from 10% to 50% by weight, preferably in a total amount of from 15% to 45% by weight, more preferably in a total amount of from 20% to 40% by weight, in each case based on the total weight of the composition.

The herbicide concentrate compositions of the present invention always comprise constituent (A) in a total amount of from 0.5% to 5% by weight and constituent (B) in a total amount of from 10% to 50% by weight, more preferably comprise constituent (A) in a total amount of from 1% to 5% by weight and constituent (B) in a total amount of from 15% to 45% by weight, and particularly preferably comprise constituent (A) in a total amount of from 2% to 4.5% by weight and constituent (B) in a total amount of from 20% to 40% by weight, in each case based on the total weight of the composition.

The herbicide(s) and safener(s) as used and defined as constituents (A), (C) and (D) in the context of the present invention are known *per se,* and described inter alia in "The Pesticide Manual", 16th edition, The British Crop Protection Council and the Royal Soc. of Chemistry, 2012 and the literature cited therein. The herbicides used in the context of the present invention are described in more detail hereinbelow.

In the context of the present invention, the terms "further herbicide(s)", "further herbicidal active ingredient(s)" and "further agrochemically active compound(s)" refer to the herbicides and agrochemically active compounds (pesticides), respectively, listed in "The Pesticide Manual", 16th edition, The British Crop Protection Council and the Royal Soc. of Chemistry, 2012, in particular to herbicides and agrochemically active compounds (pesticides) other than the compounds of constituents (A), (C) and (D) defined in the context of the present invention.

If, in the context of this invention, the short form of the common name of an active compound is used - unless specifically indicated otherwise - this includes in each case all customary derivatives, such as the esters and salts, and isomers, in particular optical isomers, in particular the commercially available form or forms. In the case of sulfonamides such as sulfonylureas, salts also include the salts formed by exchanging a hydrogen atom on the sulfonamide group by a cation.

The constituents (A) and (B) as well as the optional constituents (C) and (D) used in the context of the present invention as such are known.

Constituent (A): Mesosulfuron (IUPAC-Name: 2-[(4,6-dimethoxypyrimidin-2-ylcarbamoyl)sulfamoyl]-α-methanesulfonamido-*p*-toluic acid, CAS Reg. No. 400852-66-6), and Mesosulfuron-methyl (IUPAC-Name: methyl 2-[(4,6-dimethoxypyrimidin-2-ylcarbamoyl)sulfamoyl]-α-(methanesulfonamido)-*p*-toluate, CAS Reg. No. 208465-21-8).

Constituent (A): Mesosulfuron-methyl and its salts are known and described for example in WO 95/10507 A1.

Constituent (A) of a herbicide concentrate compositions according to the present invention preferably consists of mesosulfuron-methyl and/or mesosulfuron-methyl sodium.

Constituent (B): Tris(2-ethylhexyl) phosphate (TEHP) (CAS Reg. No. 78-42-2) is known and used as plasticizer, flame retardant and solvent. TEHP is commercially available, for example as Disflamoll^{®} TOF (Lanxess).

The herbicide concentrate compositions of the present may contain constituent (C) which consists of herbicides selected from the group consisting of the following constituents (C1) to (C6).

Constituent (C1): Iodosulfuron (IUPAC-Name: 4-iodo-2-[(4-methoxy-6-methyl-1,3,5-triazin-2-yl)carbamoylsulfamoyl]benzoic acid, CAS Reg. No. 185119-76-0), its esters and its salts are known and described for example in WO 92/13845 A1.

Preferably, constituent (C1) in the context of the present invention comprises or consists of iodosulfuron-methyl (IUPAC-Name: methyl 4-iodo-2-[(4-methoxy-6-methyl-1,3,5-triazin-2-yl)carbamoylsulfamoyl]benzoate, CAS Reg. No. 144550-06-1) and/or iodosulfuron-methyl-sodium (IUPAC-Name: sodium ({[5-iodo-2-(methoxycarbonyl)phenyl]sulfonyl}carbamoyl)(4-methoxy-6-methyl-1,3,5-triazin-2-yl)azanide, CAS Reg. No. 144550-36-71).

Constituent (C2): Thiencarbazone (IUPAC-Name: 4-[(4,5-dihydro-3-methoxy-4-methyl-5-oxo-1*H-*1,2,4-triazol-1-yl)carbonylsulfamoyl]-5-methylthiophene-3-carboxylic acid, CAS Reg. No. 936331-72-5) its esters and its salts are known and described for example in WO 01/05788.

Preferably, constituent (C2) in the context of the present invention comprises or consists of thiencarbazone-methyl (IUPAC-Name: methyl 4-[(4,5-dihydro-3-methoxy-4-methyl-5-oxo-1*H*-1,2,4-triazol-1-yl)carbonylsulfamoyl]-5-methylthiophene-3-carboxylate, CAS Reg. No. 317815-83-1).

Constituent (C3): Amidosulfuron, its esters and its salts are known and described for example in EP 0 131 258 A2.

Preferably, constituent (C3) in the context of the present invention comprises or consists of amidosulfuron (IUPAC-Name: 1-(4,6-dimethoxypyrimidin-2-yl)-3-mesyl(methyl)sulfamoylurea, CAS Reg. No. 120923-37-7) and/or its sodium salt, i.e. amidosulfuron-sodium.

Constituent (C4): Foramsulfuron and its salts are known and described for example in EP 0 757 679 A1.

Preferably, constituent (C4) in the context of the present invention comprises or consists of foramsulfuron (IUPAC-Name: 1-(4,6-dimethoxypyrimidin-2-yl)-3-[2-(dimethylcarbamoyl)-5-formamidophenylsulfonyl]urea, CAS Reg. No. 173159-57-4) and/or its sodium salt, i.e. foramsulfuron-sodium. When foramsulfuron-sodium is used in the crystalline form, then preferably in the form described in WO 2016/096613.

Constituent (C5): Propoxycarbazone and its salts are known and described for example in EP 0 507 171 A1 and US 5,534,486 A.

Preferably, constituent (C5) in the context of the present invention comprises or consists of propoxycarbazone (IUPAC-Name: methyl 2-[(4,5-dihydro-4-methyl-5-oxo-3-propoxy-1H-1,2,4-triazole-1-carboxamido)sulfonyl]benzoate, CAS Reg. No. 145026-81-9) and/or its sodium salt, i.e. propoxycarbazone -sodium (CAS Reg. No. 181274-15-7).

Constituent (C6): Diflufenican (IUPAC-Name: 2',4'-difluoro-2-(α,α,α-trifluoro-*m-*tolyloxy)nicotinanilide, CAS Reg. No. 83164-33-4) is known and described for example in EP 0 053 011 A1 and US 4,618,366 A.

For use of constituent (A) (and the optionally present constituent (C)) of compositions of the present invention, it is expedient, depending on the plant crop, to apply a safener in order to reduce or to avoid possible damage to the crop plants. Examples of suitable safeners are those which have a safener action in combination with sulfonylurea herbicides, preferably phenylsulfonylureas. Suitable safeners are for example disclosed in WO-A-96/14747 and the literature cited therein.

Constituent (D) consists of ingredients acting as safeners in monocotyledonous crops. Safeneres suitable to be used as constituent (D) in the context of the present invention are known *per se,* and described for example in WO 2013/092500 A1 on pages 87, line 21 to page 100, line 25, and the literature cited therein.

The following compounds are examples of suitable safeners of constituent (D) for the abovementioned herbicidally active constituent (A):
a) Compounds of the dichlorophenylpyrazoline-3-carboxylic acid type, preferably compounds such as ethyl 1-(2,4-dichlorophenyl)-5-(ethoxycarbonyl)-5-methyl-2-pyrazoline-3-carboxylate (mefenpyr-diethyl), and related compounds as they are described for example in WO 91/07874.
b) Dichlorophenylpyrazolecarboxylic acid derivatives, preferably compounds such as ethyl 1-(2,4-dichlorophenyl)-5-methylpyrazole-3-carboxylate, ethyl 1-(2,4-dichlorophenyl)-5-isopropylpyrazole-3-carboxylate, ethyl 1-(2,4-dichlorophenyl)-5-(1,1-dimethyl-ethyl)pyrazole-3- carboxylate, ethyl 1-(2,4-dichlorophenyl)-5-phenylpyrazole-3- carboxylate and related compounds as are described in EP-A-333 131 and EP-A-269 806.
c) Compounds of the triazolecarboxylic acid type, preferably compounds such as fenchlorazole, i.e. ethyl 1-(2,4-dichlorophenyl)-5-trichloromethyl-(1H)-1,2,4-triazole-3-carboxylate and related compounds (see EP-A-174 562 and EP-A-346 620).
d) Compounds of the 5-benzyl- or 5-phenyl-2-isoxazoline-3-carboxylic acid type or of the 5,5-diphenyl-2-isoxazoline-3-carboxylic acid type, preferably compounds such as ethyl 5-(2,4-dichlorobenzyl)-2- isoxazoline-3-carboxylate (or ethyl 5-phenyl-2-isoxazoline-3-carboxylate and related compounds as are described in WO 91/08202, or of ethyl 5,5-diphenyl-2-isoxazoline-3-carboxylate (isoxadifen-ethyl) or n-propyl 5,5-diphenyl-2-isoxazoline-3-carboxylate or ethyl 5-(4-fluorophenyl)-5-phenyl-2-isoxazoline-3-carboxylate, as are described in patent application (WO-A-95/07897).
e) Compounds of the 8-quinoline oxyacetic acid type, preferably
   1-methylhex-1-yl (5-chloro-8-quinolinoxy)acetate (cloquintocet-mexyl),
   (1,3-dimethylbut-1-yl) (5-chloro-8-quinolinoxy)acetate,
   4-allyloxybutyl (5-chloro-8-quinolinoxy)acetate,
   1-allyloxyprop-2-yl (5-chloro-8-quinolinoxy)acetate,
   ethyl (5-chloro-8-quinolinoxy)acetate,
   methyl (5-chloro-8-quinolinoxy)acetate,
   allyl (5-chloro-8-quinolinoxy)acetate,
   2-(2-propylideneiminooxy)-1-ethyl (5-chloro-8-quinolinoxy)acetate,
   2-oxoprop-1-yl (5-chloro-8-quinolinoxy)acetate,
   and related compounds as are described in EP-A-86 750, EP-A-94 349 and EP-A-191 736 or EP-A-0 492 366.
f) Compounds of the (5-chloro-8-quinolinoxy)malonic acid type, preferably compounds such as diethyl (5-chloro-8-quinolinoxy)malonate, diallyl (5-chloro-8-quinolinoxy)malonate, methyl ethyl (5-chloro-8-quinolinoxy)-malonate and related compounds as are described in EP-A-0 582 198.
g) Active compounds of the phenoxyacetic acids, phenoxypropionic acids or aromatic carboxylic acids type, such as, for example, 2,4-dichlorophenoxyacetic acid (2,4-D) and esters thereoef, 4-chloro-2-methylphenoxypropionic esters (mecoprop), MCPA or 3,6-dichloro-2-methoxybenzoic acid (dicamba) and esters thereof.

Constituent (D) of the herbicide concentrate compositions according to the present invention is preferably selected from the group consisting of (D1) mefenpyr, its esters and/or salts thereof (preferably mefenpyr-diethyl), (D2) isoxadifen, its esters and/or salts thereof (preferably isoxadifen-ethyl), (D3) cyprosulfamide, its esters and/or salts thereof (preferably cyprosulfamide), (D4) cloquintocet, its esters and/or salts thereof (preferably cloquintocet-mexyl), (D5) fenchlorazol, its esters and/or salts thereof (preferably fenchlorazol), and (D6) furilazol, its esters and/or salts thereof (preferably furilazol).

In herbicide concentrate compositions according to the present invention, if present, the safener of constituent (D) preferably is selected from the group consisting of (D1) mefenpyr, its esters and/or salts thereof (preferably mefenpyr-diethyl), (D2) isoxadifen, its esters and/or salts thereof (preferably isoxadifen-ethyl), (D3) cyprosulfamide, its esters and/or salts thereof (preferably cyprosulfamide), (D4) cloquintocet, its esters and/or salts thereof (preferably cloquintocet-mexyl), (D5) fenchlorazol, its esters and/or salts thereof (preferably fenchlorazol), and (D6) furilazol, its esters and/or salts thereof (preferably furilazol).

Particularly preferred constituents (D) are constituents (D1) to (D4):
Constituent (D1): Mefenpyr (IUPAC-Name: (*RS*)-1-(2,4-dichlorophenyl)-5-methyl-2-pyrazoline-3,5-dicarboxylic acid, CAS Reg. No. 135591-00-3) and Mefenpyr-diethyl (IUPAC-Name: diethyl (RS)-1-(2,4-dichlorophenyl)-5-methyl-2-pyrazoline-3,5-dicarboxylate, CAS Reg. No. 135590-91-9).
Generally, the safener mefenpyr-diethyl showed excellent efficacy as constituent (D) in combination with constituents (A) and (B) of the present invention.
Constituent (D1): Mefenpyr, its esters and/or salts thereof are known and described for example in WO 91/07874 A1.
Constituent (D2): Isoxadifen (IUPAC-Name: 4,5-dihydro-5,5-diphenyl-1,2-oxazole-3-carboxylic acid, CAS Reg. No. 209866-92-2) and Isoxadifen-ethyl (IUPAC-Name: ethyl 4,5-dihydro-5,5-diphenyl-1,2-oxazole-3-carboxylate, CAS Reg. No. 163520-33-0).
Constituent (D2): Isoxadifen, its esters and/or salts thereof are known and described for example in WO 95/07897 A1.
Constituent (D3): Cyprosulfamide (IUPAC-Name: *N*-[4-(cyclopropylcarbamoyl)phenylsulfonyl]-2-methoxybenzamide, CAS Reg. No. 221667-31-8).
Constituent (D3): Cyprosulfamide, its esters and/or salts thereof are known and described for example in WO 99/16744 A1.
Constituent (D4): Cloquintocet (IUPAC-Name: (5-chloroquinolin-8-yloxy)acetic acid, CAS Reg. No. 88349-88-6) and Cloquintocet-mexyl (IUPAC-Name: ((*RS*)-1-methylhexyl (5-chloroquinolin-8-yloxy)acetate, CAS Reg. No. 99607-70-2).
Constituent (D4): Cloquintocet, its esters and/or salts thereof are known and described for example in US 4,881,966 A.

The salts of the compounds of constituents (A), (C) and (D) in the context of the present invention preferably are in the form of the respective alkali metal salts, alkaline earth salts or ammonium salts, preferably in the form of the respective alkali metal salts, more preferably in the form of the respective sodium or potassium salts, most preferably in the form of the respective sodium salts.

The herbicide concentrate compositions according to the invention comprise a herbicidally effective amount of constituent (A), and in addition to constituent (B) may comprise further constituents, for example agrochemically active compounds of a different type and/or formulation auxiliaires and/or additives customary in crop protection, or they may be employed together with these.

In a preferred embodiment, the compositions according to the invention have improved effects. The improved effects allow the application rates of the individual active compounds to be reduced, a more potent action at the same application rate, the control of hitherto uncontrolable species (activity gaps), an extended application period and/or a reduced number of individual applications required and - as a result for the user - more advantageous weed control systems both from an economical and ecological point of view.

The application rate of the herbicide concentrate compositions of the present invention can be varied in certain ranges depending on the concerning the requirements of timing, the weeds to be controlled and the crop plant. Generally, the amount used of the herbicide concentrate compositions of the present invention is such that the application rate of constituent (A) of the present invention is in the range of from 0.5 to 50 g/ha, preferably is in the range of from 1 to 25 g/ha, and more preferably is in the range of from 2 to 20 g/ha. It was found that particularly preferred application rates of constituent (A) of the present invention are in the range of from 5 to 16 g/ha, often in the range of from 5 to 12 g/ha.

The herbicide concentrate compositions of the present invention preferably are in the form of a formulation selected from the group consisting of emulsifiable concentrates (EC), oil dispersions (OD) and wettable granules (WG). Particularly preferred are herbicide concentrate compositions of the present invention in the form of an oil dispersion (OD).

Advantageously, the herbicide concentrate compositions of the present invention comprise one or more safeners, preferably one or more safeners selected from the group consisting of (D1) mefenpyr, its esters and/or salts thereof (preferably mefenpyr-diethyl), (D2) isoxadifen, its esters and/or salts thereof (preferably isoxadifen-ethyl), (D3) cyprosulfamide, its esters and/or salts thereof (preferably cyprosulfamide), (D4) cloquintocet, its esters and/or salts thereof (preferably cloquintocet-mexyl), (D5) fenchlorazol, its esters and/or salts thereof (preferably fenchlorazol), and (D6) furilazol, its esters and/or salts thereof (preferably furilazol).

Advantageously, the herbicide concentrate compositions of the present invention comprise one or more further herbicides selected from the group consisting of (C1) to (C6) defined herein.

Preferably, the herbicide concentrate compositions of the present invention comprise one or more further herbicides selected from the group consisting of (C1) to (C6) defined herein and one or more safeners.

Preferably, the herbicide concentrate compositions of the present invention comprise
one or more further herbicides selected from the group consisting of (C1) iodosulfuron-methyl and salts thereof, (C2) thiencarbazone-methyl and salts thereof, (C5) propoxycarbazone and salts thereof, and (C6) diflufenican,
   and/or
(D) one or more safeners selected from the group consisting of (D1) mefenpyr, its esters and/or salts thereof (preferably mefenpyr-diethyl), (D2) isoxadifen, its esters and/or salts thereof (preferably isoxadifen-ethyl), (D3) cyprosulfamide, its esters and/or salts thereof (preferably cyprosulfamide), (D4) cloquintocet, its esters and/or salts thereof (preferably cloquintocet-mexyl), (D5) fenchlorazol, its esters and/or salts thereof (preferably fenchlorazol), and (D6) furilazol, its esters and/or salts thereof (preferably furilazol).

Preferably, the herbicide concentrate compositions of the present invention comprise
one or more further herbicides selected from the group consisting of (C1) iodosulfuron-methyl or its sodium salt, (C2) thiencarbazone-methyl or its sodium salt, (C5) propoxycarbazone or its sodium salt, and (C6) diflufenican,
   and/or
(D) one or more safeners selected from the group consisting of (D1) mefenpyr-diethyl, (D2) isoxadifen-ethyl, (D3) cyprosulfamide, (D4) cloquintocet-mexyl, (D5) fenchlorazol and (D6) furilazol.

More preferably, the herbicide concentrate compositions of the present invention comprise
one or more further herbicides selected from the group consisting of (C1) iodosulfuron-methyl or its sodium salt, (C2) thiencarbazone-methyl or its sodium salt, and (C6) diflufenican,
   and
one or more safeners selected from the group consisting of (D1) mefenpyr-diethyl, (D2) isoxadifen-ethyl, (D3) cyprosulfamide, (D4) cloquintocet-mexyl, and (D6) furilazol.

Particular preference is given to herbicide concentrate compositions according to the present invention wherein the safener is (D1) mefenpyr-diethyl, (D2) isoxadifen-ethyl or (D3) cyprosulfamide.

Particular preference is given to herbicide concentrate compositions according to the present invention wherein the one or more further herbicides are (C1) iodosulfuron-methyl or its sodium salt and/or (C2) thiencarbazone-methyl or its sodium salt.

In case (C1) iodosulfuron-methyl or a salt thereof is present in herbicide concentrates compositions according to the present invention, the weight ratio of the constituents (A) and (C1) to one another preferably is in the range of from 8 : 1 to 1 : 1, more preferably in the range of from 5 : 1 to 1 : 1, even more preferably in the range of from 3 : 1 to 1 : 1.

In case (C2) thiencarbazone-methyl or a salt thereof is present in herbicide concentrates compositions according to the present invention, the weight ratio of the constituents (A) and (C2) to one another preferably is in the range of from 5 : 1 to 1 : 2, more preferably in the range of from 4 : 1 to 1 : 1, even more preferably in the range of from 3 : 1 to 1 : 1.

In case a safener (D) is present in herbicide concentrates compositions according to the present invention, the weight ratio of constituent (A) and the total amount of constituent (D) to one another preferably is in the range of from 1 : 1 to 1 : 6, more preferably of from 2 : 3 to 1 : 5, even more preferably of from 1 : 2 to 1 : 4. In particular in case the safener is (D1) mefenpyr-diethyl, the particularly preferred weight ratio of constituent (A) and the amount of constituent (D1) to one another preferably is in the range of from 2 : 5 to 1 : 4.

The herbicide concentrate compositions according to the invention can be used together with other agrochemically active compounds (for example be combined as tank-mix) or with formulation auxiliaries and additives customary in crop protection. Additives are, for example, fertilizers and colorants. Preference is in each case given to the amounts, ratios and application rates and ranges of application rates mentioned above.

While the compositions according to the invention have an outstanding herbicidal activity against monocotyledonous and dicotyledonous weeds, the crop plants are damaged only to a minor extent, if at all, in particular if one or more safeners (as constituent (D) of compositions of the present invention) are used.

Moreover, some of the compositions according to the invention have outstanding growth-regulatory properties on the crop plants. They engage in the plants' metabolism in a regulatory manner and can thus be employed for provoking directed effects on plant constituents and to facilitate harvesting such as for example by triggering desiccation and stunted growth. Moreover, they are also suitable for the general control and inhibition of undesired vegetative growth without simultaneously destroying the plants. An inhibition of vegetative growth is very important in a large number of monocotyledonous and dicotyledonous crops since yield losses as a result of lodging can thus be reduced, or prevented completely.

Owing to their herbicidal and plant-growth-regulatory properties, the compositions according to the invention can be employed for controlling harmful plants in genetically modified crop plants or crop plants obtained by mutation/selection. These crop plants are distinguished as a rule by particular, advantageous properties, such as resistances to herbicidal compositions or resistances to plant diseases or causative agents of plant diseases such as particular insects or microorganisms such as fungi, bacteria or viruses. Other particular properties relate, for example, to the harvested material with regard to quantity, quality, storability, composition and specific constituents. Thus, for example, transgenic plants are known whose starch content is increased or whose starch quality is altered, or those where the harvested material has a different fatty acid composition.

Conventional methods of generating novel plants which have modified properties in comparison to plants occurring to date consist, for example, in traditional breeding methods and the generation of mutants (see, for example, US 5,162,602; US 4,761,373; US 4,443,971). Alternatively, novel plants with altered properties can be generated with the aid of recombinant methods (see, for example, EP-A-0221044, EP-A-0131624). For example, the following have been described in several cases:
- the modification, by recombinant technology, of crop plants with the aim of modifying the starch synthesized in the plants (for example WO 92/11376, WO 92/14827, WO 91/19806),
- transgenic crop plants which exhibit resistances to other herbicides, for example to sulfonylureas (EP-A-0257993, US-A-5013659),
- transgenic crop plants with the capability of producing Bacillus thuringiensis toxins (Bt toxins), which make the plants resistant to certain pests (EP-A-0142924, EP-A-0193259),
- transgenic crop plants with a modified fatty acid composition (WO 91/13972).

A large number of techniques in molecular biology are known in principle with the aid of which novel transgenic plants with modified properties can be generated: see, for example, Sambrook et al., 1989, Molecular Cloning, A Laboratory Manual, 2nd Edition, Cold Spring Harbor Laboratory Press, Cold Spring Harbor, NY; or Winnacker "Gene und Klone", VCH Weinheim 2nd Edition 1996 or Christou, "Trends in Plant Science" 1 (1996) 423-431).

To carry out such recombinant manipulations, nucleic acid molecules which allow mutagenesis or sequence changes by recombination of DNA sequences can be introduced into plasmids. For example, the abovementioned standard methods allow base exchanges to be carried out, subsequences to be removed, or natural or synthetic sequences to be added. To connect the DNA fragments to each other, adapters or linkers may be added to the fragments.

For example, the generation of plant cells with a reduced activity of a gene product can be achieved by expressing at least one corresponding antisense RNA, a sense RNA for achieving a cosuppression effect or by expressing at least one suitably constructed ribosome which specifically cleaves transcripts of the abovementioned gene product.

To this end, it is possible to use DNA molecules which encompass the entire coding sequence of a gene product inclusive of any flanking sequences which may be present, and also DNA molecules which only encompass portions of the coding sequence, it being necessary for these portions to be long enough to have an antisense effect in the cells. The use of DNA sequences which have a high degree of homology to the encoding sequences of a gene product, but are not completely identical to them, is also possible.

When expressing nucleic acid molecules in plants, the protein synthesized can be localized in any desired compartment of the plant cell. However, to achieve localization in a particular compartment, it is possible, for example, to link the coding region with DNA sequences which ensure localization in a particular compartment. Such sequences are known to those skilled in the art (see, for example, Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

The transgenic plant cells can be regenerated by known techniques to give rise to intact plants. In principle, the transgenic plants can be plants of any desired plant species, i.e. not only monocotyledonous, but also dicotyledonous, plants. Thus, transgenic plants can be obtained whose properties are altered by overexpression, suppression or inhibition of homologous (= natural) genes or gene sequences or the expression of heterologous (= foreign) genes or gene sequences.

The invention therefore also relates to a method of controlling undesired vegetation (e.g. harmful plants), preferably in plant crops such as cereals (e.g. wheat, barley, rye, oats, hybrids thereof such as triticale, rice, corn, millet), sugar beet, sugar cane, oilseed rape, cotton and soybeans, especially preferably in monocotyledonous crops such as cereals, for example wheat, barley, rye, oats, hybrids thereof such as triticale, rice, com and millet, which comprises applying the compositions (i.e. herbicide concentrate compositions or tank-mix compositions) defined in the context of the present invention, for example by the pre-emergence method, by the post-emergence method or by the pre-emergence and the post-emergence method, to the plants, for example harmful plants, parts of these plants, plant seeds or the area where the plants grow, for example the area under cultivation, wherein the application rate of constituent (A) preferably is in the range of from 0.5 to 50 g/ha, more preferably in the range of from 1 to 25 g/ha, and particularly preferably in the range of from 2 to 20 g/ha. It was found that particularly preferred application rates of constituent (A) of the present invention are in the range of from 5 to 16 g/ha, often in the range of from 5 to 12 g/ha.

The plant crops are preferably tolerant to acetolactate synthase (ALS) inhibitors and can have been genetically modified or been obtained by mutation selection.

The invention also relates to the use of the herbicide concentrate compositions or tank-mix compositions as defined in the context of the present invention for controlling harmful plants, preferably in plant crops, wherein the application rate of constituent (A) preferably is in the range of from 0.5 to 50 g/ha, more preferably in the range of from 1 to 25 g/ha, and particularly preferably in the range of from 2 to 20 g/ha. It was found that particularly preferred application rates of constituent (A) of the present invention are in the range of from 5 to 16 g/ha, often in the range of from 5 to 12 g/ha.

The compositions according to the invention can also be used non-selectively for controlling unwanted vegetation, for example in plantation crops, in the borders of paths, in squares, in industrial plants or in railroad instalations.

The herbicide concentrate compositions as defined in the context of the present invention may be combined with further agrochemically active compounds, additives and/or customary formulation auxiliaries, which are then applied in the customary manner as a dilution with water, but also as so-called tank-mix compositions or tank-mixes by jointly diluting the different constituents with water before application to the unwanted vegetation (and optionally the crop plants).

The herbicide concentrate compositions according to the invention can be formulated in various ways, depending on the prevailing biological and/or chemical-physical parameters. The following are examples of general possibilities for formulations: wettable powders (WP), water-soluble concentrates, emulsifiable concentrates (EC), aqueous solutions (SL), emulsions (EW) such as oil-in-water and water-in-oil emulsions, sprayable solutions or emulsions, suspension concentrates (SC), oil dispersions (OD), oil- or water-based dispersions, suspoemulsions, dusts (DP), seed-dressing materials, granules for soil application or for broadcasting, or water-dispersible granules (WG), ULV formulations, microcapsules or waxes.

The individual formulation types are known in principle and are described for example, in: Winnacker-Küchler, "Chemische Technologie", Volume 7, C. Hauser Verlag Munich, 4th Edition, 1986; van Valkenburg, "Pesticide Formulations", Marcel Dekker N.Y., 1973; K. Martens, "Spray Drying Handbook", 3rd Ed. 1979, G. Goodwin Ltd. London.

The formulation auxiliaries required, such as inert materials, surfactants, solvents and other additives are also known and are described, for example, in Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte" [Surface-active ethylene oxide adducts], Wiss. Verlagsgesellschaft, Stuttgart 1976, Winnacker-Küchler, "Chemische Technologie", Volume 7, C. Hauser Verlag Munich, 4th Edition 1986.

Based on these formulations, combinations with other agrochemically active substances, such as other herbicides, fungicides or insecticides, and with (further) safeners, fertilizers and/or growth regulators, may also be prepared, for example in the form of a ready-mix or a tank-mix.

Wettable powders (sprayable powders) are products which are uniformly dispersible in water and which, besides the active compound, also comprise ionic or nonionic surfactants (wetters, dispersants), for example polyoxethylated alkylphenols, polyethoxylated fatty alcohols or fatty amines, alkanesulfonates or alkylbenzenesulfonates, sodium lignosulfonate, sodium 2,2'-dinaphthylmethane-6,6'-disulfonate, sodium dibutylnaphthalenesulfonate or else sodium oleoylmethyltauride, in addition to a diluent or inert material.

Emulsifiable concentrates are prepared by dissolving the active compound in an organic solvent, for example butanol, cyclohexanone, dimethylformamide, xylene or else higher-boiling aromatics or hydrocarbons with addition of one or more ionic or nonionic surfactants (emulsifiers). Examples of emulsifiers which may be used are: calcium salts of alkylarylsulfonic acids, such as calcium dodecylbenzene sulfonate, or nonionic emulsifiers such as fatty acid polyglycol esters, alkylaryl polyglycol ethers, fatty alcohol polyglycol ethers, propylene oxide/ethylene oxide condensates, alkyl polyethers, sorbitan fatty acid esters, polyoxyethylene sorbitan fatty acid esters or polyoxethylene sorbitol esters.

Dusts are obtained by grinding the active compound with finely divided solid materials, for example talc, natural clays such as kaolin, bentonite and pyrophyllite, or diatomaceous earth.

Suspension concentrates (SC) can be water- or oil-based. They can be prepared, for example, by wet grinding by means of commercially available bead mills and, if appropriate, addition of further surfactants as they have already been mentioned for example above in the case of the other formulation types.

Emulsions, for example oil-in-water emulsions (EW), can be prepared for example by means of stirrers, colloid mills and/or static mixers using aqueous organic solvents and, if appropriate, further surfactants as have already been mentioned for example above in the case of the other formulation types.

Granules can be prepared either by spraying the active compound onto adsorptive, granulated inert material or by applying active compound concentrates to the surface of carriers such as sand, kaolinites or granulated inert material with the aid of binders, for example polyvinyl alcohol, sodium polyacrylate or else mineral oils. Suitable active compounds may also be granulated in the manner conventionally used for the production of fertilizer granules, if desired in a mixture with fertilizers. As a rule, water-dispersible granules are prepared by customary processes such as spray drying, fluidized-bed granulation, disk granulation, mixing with high-speed mixers and extrusion without solid inert material. Regarding the production of disk granules, fluidized-bed granules, extruder granules and spray granules, see, for example, the methods in "Spray-Drying Handbook" 3rd ed. 1979, G. Goodwin Ltd., London; J.E. Browning, "Agglomeration", Chemical and Engineering 1967, page 147 et seq; "Perry's Chemical Engineer's Handbook", 5th Ed., McGraw-Hill, New York 1973, pp. 8-57.

As regards further details on the formulation of crop protection products, see, for example, G.C. Klingmam, "Weed Control as a Science", John Wiley and Sons, Inc., New York, 1961, pages 81-96 and J.D. Freyer, S.A. Evans, "Weed Control Handbook", 5th Ed., Blackwell Scientific Publications, Oxford, 1968, pages 101-103.

To some extent depending on the type of formulation, the herbicide concentrate compositions according to the present invention preferably additionally comprise one or more further constituents selected from the group consisting of further formulation auxiliaries and additives customary in crop protection, preferably selected from the group consisting of constituents (E) to (G), and optionally constituent (H):
(E) surfactants, the presence of which is compulsory at a minimum of 3% and up to to 60% by weight, preferably in a total amount of from 5% to 40% by weight, more preferably in a total amount of from 10% to 30% by weight,
(F) water, preferably in a total amount of from 0.1% to 30% by weight,
(G) organic solvents, preferably in a total amount of from 0.1% to 20% by weight,
(H) other formulation adjuvants (constituent (H)) different from constituents (B), (E), (F) and (G), preferably in a total amount of from 0.1% to 50% by weight,

in each case based on the total weight of the composition.

In preferred embodiments, the herbicide concentrate compositions according to the present invention comprise
constituent (A) in a total amount of from 0.5% to 5% by weight, preferably in a total amount of from 1% to 5% by weight, more preferably in a total amount of from 2% to 4.5% by weight,
constituent (B) in a total amount of from 10% to 50% by weight, preferably in a total amount of from 15% to 45% by weight, more preferably in a total amount of from 20% to 40% by weight,
and one, two, three or more further constituents selected from the group consisting of constituents (C) to (H) other herbicides (constituent (C)) in a total amount of from 0.5% to 12% by weight,
safeners (constituent D)) in a total amount of from 0.75% to 15% by weight,
surfactants (constituent (E)) in a total amount of from 3% to 60% by weight, preferably in a total amount of from 5% to 40% by weight, more preferably in a total amount of from 10% to 30% by weight, water (constituent (F)) in a total amount of from 0.1% to 30% by weight,
organic solvents (constituent (G)) in a total amount of from 0.1% to 20% by weight,
other formulation adjuvants (constituent (H)) different from constituents (B), (E), (F) and (G) in a total amount 0.1% to 50% by weight,
in each case based on the total weight of the composition.

In preferred embodiments, the herbicide concentrate compositions according to the present invention comprise
constituent (A) in a total amount of from 0.5% to 5% by weight, preferably in a total amount of from 1% to 5% by weight, more preferably in a total amount of from 2% to 4.5% by weight,
constituent (B) in a total amount of from 10% to 50% by weight, preferably in a total amount of from 15% to 45% by weight, more preferably in a total amount of from 20% to 40% by weight,
one or more safeners (constituent D)) in a total amount of from 0.75% to 15% by weight,
and one, two, three or more further constituents selected from the group consisting of constituents (C) and (E) to (H)
other herbicides (constituent (C)) in a total amount of from 0.5% to 12% by weight,
surfactants (constituent (E)) in a total amount of from 3% to 60% by weight, preferably in a total amount of from 5% to 40% by weight, more preferably in a total amount of from 10% to 30% by weight, water (constituent (F)) in a total amount of from 0.1% to 30% by weight,
organic solvents (constituent (G)) in a total amount of from 0.1% to 20% by weight,
other formulation adjuvants (constituent (H)) different from constituents (B), (E), (F) and (G) in a total amount 0.1% to 50% by weight,
in each case based on the total weight of the composition.

In preferred embodiments, the herbicide concentrate compositions according to the present invention comprise
constituent (A) in a total amount of from 0.5% to 5% by weight, preferably in a total amount of from 1% to 5% by weight, more preferably in a total amount of from 2% to 4.5% by weight,
constituent (B) in a total amount of from 10% to 50% by weight, preferably in a total amount of from 15% to 45% by weight, more preferably in a total amount of from 20% to 40% by weight,
other herbicides (constituent (C)) in a total amount of from 0.5% to 12% by weight,
one or more safeners (constituent D)) in a total amount of from 2% to 15% by weight,
and one, two, three or more further constituents selected from the group consisting of constituents (E) to (H)
surfactants (constituent (E)) in a total amount of from 3% to 60% by weight, preferably in a total amount of from 5% to 40% by weight, more preferably in a total amount of from 10% to 30% by weight, water (constituent (F)) in a total amount of from 0.1% to 30% by weight,
organic solvents (constituent (G)) in a total amount of from 0.1% to 20% by weight,
other formulation adjuvants (constituent (H)) different from constituents (B), (E), (F) and (G) in a total amount 0.1% to 50% by weight,
in each case based on the total weight of the composition.

In preferred embodiments, the herbicide concentrate compositions according to the present invention comprise
constituent (A) in a total amount of from 1% to 5% by weight, more preferably in a total amount of from 2% to 4.5% by weight,
constituent (B) in a total amount of from 15% to 45% by weight, more preferably in a total amount of from 20% to 40% by weight,
other herbicides (constituent (C)) in a total amount of from 0.5% to 12% by weight,
one or more safeners (constituent D)) in a total amount of from 2% to 15% by weight,
and one, two, three or more further constituents selected from the group consisting of constituents (E) to (H)
surfactants (constituent (E)) in a total amount of from 3% to 60% by weight, preferably in a total amount of from 5% to 40% by weight, more preferably in a total amount of from 10% to 30% by weight, water (constituent (F)) in a total amount of from 0.1% to 30% by weight,
organic solvents (constituent (G)) in a total amount of from 0.1% to 20% by weight,
other formulation adjuvants (constituent (H)) different from constituents (B), (E), (F) and (G) in a total amount 0.1% to 50% by weight,
in each case based on the total weight of the composition.

In preferred embodiments, the herbicide concentrate compositions according to the present invention comprise
constituent (A) in a total amount of from 2% to 4.5% by weight,
constituent (B) in a total amount of from 20% to 40% by weight,
other herbicides (constituent (C)) in a total amount of from 0.5% to 12% by weight,
one or more safeners (constituent D)) in a total amount of from 5% to 15% by weight,
and one, two, three or more further constituents selected from the group consisting of constituents (E) to (H) surfactants (constituent (E)) in a total amount of from 3% to 60% by weight, preferably in a total amount of from 5% to 40% by weight, more preferably in a total amount of from 10% to 30% by weight, water (constituent (F)) in a total amount of from 0.1% to 30% by weight,
organic solvents (constituent (G)) in a total amount of from 0.1% to 20% by weight,
other formulation adjuvants (constituent (H)) different from constituents (B), (E), (F) and (G) in a total amount 0.1% to 50% by weight,
in each case based on the total weight of the composition.

The active compound concentration in wettable powders is, for example, approximately 10 to 95% by weight, the remainder to 100% by weight being composed of customary formulation constituents. In the case of emulsifiable concentrates, the active compound concentration may amount to, for example, 5 to 80% by weight. Formulations in the form of dusts comprise, in most cases, 5 to 20% by weight of active compound, sprayable solutions approximately 0.2 to 25% by weight of active compound. In the case of granules such as dispersible granules, the active compound content depends partly on whether the active compound is present in liquid or solid form and on which granulation auxiliaries and fillers are being used. As a rule, the content amounts to between 10 and 90% by weight in the case of the water-dispersible granules.

In addition, the abovementioned active compound formulations may comprise, if appropriate, the conventional adhesives, wetters, dispersants, emulsifiers, preservatives, antifreeze agents, solvents, fillers, colorants, carriers, antifoams, evaporation inhibitors, pH regulators or viscosity regulators.

The herbicidal action of the herbicide concentrate compositions according to the invention can be improved, for example, by surfactants, preferably by wetters from the group of the fatty alcohol polyglycol ethers. The fatty alcohol polyglycol ethers preferable contain 10 - 18 carbon atoms in the fatty alcohol radical and 2 - 20 ethylene oxide units in the polyglycol ether moiety. The fatty alcohol polyglycol ethers can be nonionic or ionic, for example in the form of fatty alcohol polyglycol ethers sulfates, which can be used, for example, as alkali metal salts (e.g. sodium salts or potassium salts) or ammonium salts, but also as alkaline earth metal salts such as magnesium salts, such as sodium C₁₂/C₁₄-fatty alcohol diglycol ether sulfate (Genapol^{®} LRO, Clariant); see, for example, EP-A-0476555, EP-A-0048436, EP-A-0336151 or US-A-4,400,196 and also Proc. EWRS Symp. "Factors Affecting Herbicidal Activity and Selectivity", 227 - 232 (1988). Nonionic fatty alcohol polyglycol ethers are, for example, (C₁₀-C₁₈)-, preferably (C₁₀-C₁₄)-fatty alkohol polyglycol ethers containing 2 - 20, preferably 3 - 15, ethylene oxide units (e.g. isotridecyl alcohol polyglycol ether), for example from the Genapol^{®} series, such as Genapol^{®} X-030, Genapol^{®} X-060, Genapol^{®} X-080 or Genapol^{®} X-150 (all from Clariant GmbH).

The present invention furthermore embraces the combination of herbicide concentrate compositions of the present invention with the wetting agents mentioned above from the group of the fatty alcohol polyglycolethers which preferably contain 10 - 18 carbon atoms in the fatty alcohol radical and 2 - 20 ethylene oxide units in the polyglycol ether moiety and which can be present in nonionic or ionic form (for example as fatty alcohol polyglycol ether sulfates). Preference is given to C₁₂/C₁₄-fatty alcohol diglycol ether sulfate sodium (Genapol^{®} LRO, Clariant); and isotridecyl alcohol polyglycol ether with 3 - 15 ethylene oxide units, for example from the Genapol^{®} X series, such as Genapol^{®} X-030, Genapol^{®} X-060, Genapol^{®} X-080 or Genapol^{®} X-150 (all from Clariant GmbH). It is furthermore known that fatty alcohol polyglycol ethers such as nonionic or ionic fatty alcohol polyglycol ethers (for example fatty alcohol polyglycol ether sulfates) are also suitable for use as penetrants and activity enhancers for a number of other herbicides, inter alia also for herbicides from the group of the imidazolinones (see, for example, EP-A-0502014).

Preferably, one or more surfactants (constituent (E)) are selected from the group consisting of castor oil ethoxylates, alkyl sulfosuccinates, polyhydroxy fatty acids and polyethylene glycol mono (tristyrylphenyl) ethers.

Preferred herbicide concentrate compositions according to the present invention comprise one or more surfactants (constituent (E)) selected from the group consisting of castor oil ethoxylates, C₁-C₁₂-alkyl sulfosuccinates, polyhydroxy C₁₂-C₂₂-fatty acids and polyethylene glycol mono (tristyrylphenyl) ethers.

Preferably, one or more surfactants (constituent (E)) are selected from the group consisting of castor oil ethoxylate (10EO), castor oil ethoxylate (40EO), sodium-2-ethylhexylsulfosuccinate, polyhydroxystearic acid and polyethylene glycol mono (tristyrylphenyl) ether (16 EO).

In preferred herbicide concentrate compositions according to the present invention the total amount of nonionic surfactants is at least 2% by weight, preferably at least 3% by weight, more preferably at least 4% by weight, in each case based on the total weight of the composition.

In preferred embodiments, the compositions according to the present invention comprise at least one nonionic surfactant selected from the group consisting of castor oil ethoxylates with 5 - 50 ethylene oxide (EO) units in the polyglycol ether moiety, more preferably castor oil ethoxylate (10EO) and/or castor oil ethoxylate (40EO), preferably in a total amount of at least 3% by weight, more preferably at least 4% by weight, in each case based on the total weight of the composition.

In some preferred embodiments, the compositions according to the present invention comprise at least one ionic surfactant selected from the group consisting of sulfosuccinates, preferably comprising or consisting of sodium-2-ethylhexylsulfosuccinate. If a sulfosuccinate such as sodium-2-ethylhexylsulfosuccinate is present in compositions according to the present invention, it is preferably present in a total amount of at least 3% by weight, more preferably of at least 4% by weight, in each case based on the total weight of the composition.

In preferred embodiments the compositions according to the present invention comprise at least one nonionic surfactant and one ionic surfactant, wherein the total amount thereof by weight preferably is in the range of from 3 : 1 to 1 : 3, more preferably in a ratio by weight in the range of from 2 : 1 to 1 : 2 , in each case based on the total weight of the composition. Preferably, the ratio of the total amount of nonionic surfactants to the total amount of ionic surfactants is in the range of from 2 : 1 to 1 : 1, more preferably said ratio is greater than 1 : 1, i.e. the amount of nonionic surfactants preferably is somewhat higher than the amount of ionic surfactants, based on the total weight of the composition. In said preferred embodiments, the nonionic surfactant preferably are selected from the group consisting of castor oil ethoxylates with 5 - 50 ethylene oxide units in the polyglycol ether moiety, morepreferably castor oil ethoxylate (10EO) and/or castor oil ethoxylate (40EO), and the ionic surfactant is selected from the group consisting of sulfosuccinates, and preferably is sodium-2-ethylhexylsulfosuccinate. Organic solvents that may be used as constituent (G) in the herbicide concentrate compositions according to the present invention preferably are selected from the group consisting of isobornyl acetate and propylene carbonate.

Isobornyl acetate may be used as organic solvent (constituent (G)) in the herbicide concentrate compositions according to the present invention. If present, the total amount of isobornyl acetate preferably is in the range of from 10% to 40% by weight, based on the total weight of the herbicide concentrate compositions according to the present invention.

A preferred organic solvent (constituent (G)) in the herbicide concentrate compositions according to the present invention is propylene carbonate. If present, the total amount of propylene carbonate preferably is in the range of from 0.1% to 10% by weight, based on the total weight of the herbicide concentrate compositions according to the present invention.

Formulation adjuvants (constituent (H)) in the herbicide concentrate compositions according to the present invention are preferably selected from the groups of C₁-C₄-alkyl esters of C₁₆-C₂₂-fatty acids, C₁₀-C₂₂-fatty alcohol ethoxylate ethers, thickeners, and pH-regulating agents (pH-buffers).

The compositions according to the present invention preferably comprise at least one formulation adjuvant. In a particular aspect, the compositions according to the present invention comprise one or more C₁-C₄-alkyl esters of C₁₆-C₂₂-fatty acids, preferably at least one C₁₆-C₂₂-fatty acid methyl ester, more preferably a methyl ester of a monounsaturated C₁₆-C₂₂-fatty acid. The compositions according to the present invention contain 10% to 50% by weight of methyl cis-9-octadecenoate (methyl oleate) which is for example commercially available as Radia 7066.

In preferred herbicide concentrate compositions according to the present invention the total amount of methyl esters of monounsaturated C₁₆-C₂₂-fatty acids, in particular of methyl cis-9-octadecenoate (methyl oleate), is at least 15% by weight, more preferably at least 20% by weight, in each case based on the total weight of the composition.

In preferred herbicide concentrate compositions according to the present invention the total amount of methyl esters of monounsaturated C₁₆-C₂₂-fatty acids, in particular of methyl cis-9-octadecenoate (methyl oleate), is in the range of from 10% to 50% by weight, preferably in the range of from 15% to 45% by weight, more preferably in the range of from 20% to 40% by weight, in each case based on the total weight of the composition.

The compositions according to the present invention showed similar crop safety (crop injury) in winter wheat (TRZAW) when applied post-emergence in comparison to the commercially available herbicide Incelo^{®} (mesosulfuron-methyl + thiencarbazone-methyl + mefenpyr-diethyl WG (45+15+112.5 g/kg) in combination with BioPower^{®} (sodium laurylether sulfates).

The compositions according to the present invention generally showed better grass control than a mixture of Incelo^{®} and BioPower^{®}.

In preferred compositions according to the present invention comprising methyl esters of monounsaturated C₁₆-C₂₂-fatty acids, in particular methyl cis-9-octadecenoate (methyl oleate), the ratio by weight of constituent (B) to methyl esters of monounsaturated C₁₆-C₂₂-fatty acids, in particular methyl cis-9-octadecenoate (methyl oleate), preferably is in the range of 5 : 2 to 2 : 5, more preferably in the range of 2 : 1 to 1 : 2, even more preferably in the range of 7 : 4 to 3 : 5.

In particular the preferred, more preferred or particularly preferred compositions according to the present invention were found to effectively control difficult to control weeds such as *Alopecurus myosuroides* (ALOMY), Lolium species (LOLSS) and Bromus species (BROSS), which for example are important weeds in crop plants like cereals such as wheat, barley or rye.

Generally, it was found that compositions according to the present invention wherein the ratio by weight of constituent (B) to methyl esters of monounsaturated C₁₆-C₂₂-fatty acids, in particular methyl cis-9-octadecenoate (methyl oleate), is greater than 1 : 1 may exhibit higher efficacy in grasses such as *Alopecurus myosuroides* (ALOMY) or Lolium species (LOLSS) than formulations compared to compositions according to the present invention wherein the ratio by weight of constituent (B) to methyl cis-9-octadecenoate (methyl oleate) is 1 : 1 or lower than 1 : 1 (see field trial results in the experimental section below).

Therefore, in some embodiments, in compositions according to the present invention the ratio by weight of constituent (B) to methyl esters of monounsaturated C₁₆-C₂₂-fatty acids, in particular methyl cis-9-octadecenoate (methyl oleate), preferably is greater than 1 : 1, preferably in the range of 2 : 1 to 5 : 4, more preferably in the range of from 2: 1 to 4 : 3, even more preferably in the range of from 7 : 4 to 3: 2.

Other preferred formulation adjuvants (constituent (H)) in the herbicide concentrate compositions according to the present invention are selected from the group consisting of isotridecanol ethoxylate (6EO) methyl ether, isotridecanol ethoxylate (15EO) methyl ether, lithium-hydroxy-octadecanoate, quaternium 18-hectorite, formic acid and disodium carbonate.

The herbicide concentrate compositions according to the present invention comprise
constituent (A) in a total amount of from 0.5% to 5% by weight,
constituent (B) in a total amount of from 10% to 50% by weight,
methyl cis-9-octadecenoate (methyl oleate) in a total amount of of from 10% to 50% by weight, surfactants in a total amount of at least 3% by weight,
and preferably one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,
in each case based on the total weight of the composition.

In preferred embodiments, the herbicide concentrate compositions according to the present invention comprise
constituent (A) in a total amount of from 0.5% to 5% by weight,
constituent (B) in a total amount of from 20% to 50% by weight,
methyl cis-9-octadecenoate (methyl oleate) in a total amount of of from 20% to 50% by weight, surfactants in a total amount of at least 3% by weight,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,
in each case based on the total weight of the composition.

In preferred embodiments, the herbicide concentrate compositions according to the present invention comprise
constituent (A) in a total amount of from 0.5% to 5% by weight,
constituent (B) in a total amount of from 20% to 50% by weight,
methyl cis-9-octadecenoate (methyl oleate) in a total amount of of from 20% to 50% by weight, surfactants in a total amount of at least 3% by weight, preferably selected from the group consisting of castor oil ethoxylates, alkyl sulfosuccinates, and polyethylene glycol mono (tristyrylphenyl) ethers, and one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,

in each case based on the total weight of the composition.

In preferred embodiments, the herbicide concentrate compositions according to the present invention comprise
constituent (A) in a total amount of from 0.5% to 5% by weight,
constituent (B) in a total amount of from 20% to 50% by weight,
methyl cis-9-octadecenoate (methyl oleate) in a total amount of of from 20% to 50% by weight, nonionic surfactants in a total amount of at least 2% by weight, preferably comprising a nonionic surfactant selected from the group of castor oil ethoxylates,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,
in each case based on the total weight of the composition.

In preferred embodiments, the herbicide concentrate compositions according to the present invention comprise
constituent (A) in a total amount of from 0.5% to 5% by weight,
constituent (B) in a total amount of from 20% to 50% by weight,
methyl cis-9-octadecenoate (methyl oleate) in a total amount of of from 20% to 50% by weight, nonionic surfactants in a total amount of at least 2% by weight, preferably comprising a nonionic surfactant selected from the group of castor oil ethoxylates,
one or more ionic surfactants, preferably selected from the group of sulfosuccinates,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,
in each case based on the total weight of the composition.

In preferred embodiments, the herbicide concentrate compositions according to the present invention comprise
constituent (A) in a total amount of from 0.5% to 4% by weight,
constituent (B) in a total amount of from 20% to 50% by weight,
methyl cis-9-octadecenoate (methyl oleate) in a total amount of of from 20% to 50% by weight, nonionic surfactants in a total amount of at least 3% by weight, preferably comprising a nonionic surfactant selected from the group of castor oil ethoxylates,
one or more ionic surfactants selected from the group of sulfosuccinates, preferably sodium-2-ethylhexylsulfosuccinate,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,
in each case based on the total weight of the composition.

In preferred embodiments, the herbicide concentrate compositions according to the present invention comprise
constituent (A) in a total amount of from 0.5% to 4% by weight,
constituent (B) in a total amount of from 20% to 50% by weight,
methyl cis-9-octadecenoate (methyl oleate) in a total amount of of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 3% by weight, wherein said nonionic surfactants comprise or consist of surfactants selected from the group of castor oil ethoxylates,
one or more ionic surfactants selected from the group of sulfosuccinates, preferably sodium-2-ethylhexylsulfosuccinate,
wherein the ratio of the total amount of nonionic surfactants to the total amount of ionic surfactants preferably is in the range of from 3 : 1 to 1 : 3,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,
in each case based on the total weight of the composition.

In preferred embodiments, the herbicide concentrate compositions according to the present invention comprise
constituent (A) in a total amount of from 0.5% to 3% by weight,
constituent (B) in a total amount of from 20% to 50% by weight,
methyl cis-9-octadecenoate (methyl oleate) in a total amount of of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 3% by weight, wherein said nonionic surfactants comprise or consist of surfactants selected from the group of castor oil ethoxylates,
one or more ionic surfactants comprising or consisting of sodium-2-ethylhexylsulfosuccinate, preferably in a total amount of at least 3% by weight,
wherein the ratio of the total amount of nonionic surfactants to the total amount of ionic surfactants preferably is in the range of from 2 : 1 to 1 : 2,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight,
water (constituent (F)), preferably in a total amount of from 0.1% to 30% by weight,
other formulation adjuvants (constituent (H)), preferably in a total amount of from 0.1% to 50% by weight,
in each case based on the total weight of the composition.

In all the above-mentioned preferred embodiments, the other herbicides (constituent (C)) and the preferred safeners (constituent (D)) are preferably selected from the list of the respective preferred, more preferred or particularly preferred constituents (C) and constituents (D) mentioned above.

In all the above-mentioned preferred embodiments, the formulation adjuvants (constituent (H)) in the herbicide concentrate compositions according to the present invention preferably are selected from the groups of C₁₀-C₂₂-fatty alcohol ethoxylate ethers, thickeners, and pH-regulating agents (pH-buffers).

In all the above-mentioned preferred embodiments, the formulation adjuvants (constituent (H)) in the herbicide concentrate compositions according to the present invention are preferably selected from the group consisting of isotridecanol ethoxylate (6EO) methyl ether, isotridecanol ethoxylate (15EO) methyl ether, lithium-hydroxy-octadecanoate, quaternium 18-hectorite, formic acid and disodium carbonate.

In more preferred embodiments, the herbicide concentrate compositions according to the present invention comprise
constituent (A) in a total amount of from 0.5% to 2.5% by weight,
constituent (B) in a total amount of from 20% to 50% by weight,
methyl cis-9-octadecenoate (methyl oleate) in a total amount of of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 2% by weight, preferably comprising a nonionic surfactant selected from the group of castor oil ethoxylates,
safeners (constituent D)) selected from (D1) mefenpyr, its esters and/or salts thereof or (D4) cloquintocet, its esters and/or salts thereof, preferably in a total amount of from 1% to 10% by weight, and one, two, three or more further constituents selected from the group consisting of other herbicides (constituent (C)), preferably in a total amount of from 0.5% to 12% by weight,
water (constituent (F)), preferably in a total amount of from 0.1% to 10% by weight,
other formulation adjuvants (constituent (H)), preferably in a total amount of from 0.1% to 50% by weight,
in each case based on the total weight of the composition.

In more preferred embodiments, the herbicide concentrate compositions according to the present invention comprise
constituent (A) in a total amount of from 0.5% to 2.5% by weight,
constituent (B) in a total amount of from 20% to 50% by weight,
methyl cis-9-octadecenoate (methyl oleate) in a total amount of of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 3% by weight, preferably comprising a nonionic surfactant selected from the group of castor oil ethoxylates,
optionally an ionic surfactant selected from the group of sulfosuccinates in a total amount of at least 3% by weight,
other herbicides (constituent (C)), selected from (C1) iodosulfuron-methyl and salts thereof, (C2) thiencarbazone-methyl and salts thereof, and mixtures thereof, preferably in a total amount of from 0.5% to 8% by weight,
safeners (constituent D)) selected from (D1) mefenpyr, its esters and/or salts thereof or (D4) cloquintocet, its esters and/or salts thereof, preferably in a total amount of from 1% to 10% by weight, and one, two or more further constituents selected from the group consisting of water (constituent (F)), preferably in a total amount of from 0.1% to 10% by weight,
other formulation adjuvants (constituent (H)) selected from the groups of C₁₀-C₂₂-fatty alcohol ethoxylate ethers, thickeners, and pH-regulating agents (pH-buffers), preferably in a total amount of from 0.1% to 50% by weight,
in each case based on the total weight of the composition.

In more preferred embodiments, the herbicide concentrate compositions according to the present invention comprise
constituent (A) in a total amount of from 0.5% to 2.5% by weight,
constituent (B) in a total amount of from 20% to 50% by weight,
methyl cis-9-octadecenoate (methyl oleate) in a total amount of of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 3% by weight, preferably comprising a nonionic surfactant selected from the group of castor oil ethoxylates,
optionally an ionic surfactant selected from the group of sulfosuccinates in a total amount of at least 3% by weight,
other herbicides (constituent (C)), selected from iodosulfuron-methyl, iodosulfuron-methyl, sodium salt, thiencarbazone-methyl, and mixtures thereof, preferably in a total amount of from 0.5% to 8% by weight,
safeners (constituent D)) selected from mefenpyr-diethyl or cloquintocet-mexyl, preferably in a total amount of from 1% to 10% by weight,
and one, two or more further constituents selected from the group consisting of water (constituent (F)), preferably in a total amount of from 0.1% to 10% by weight,
other formulation adjuvants (constituent (H)) selected from the groups of C₁₀-C₂₂-fatty alcohol ethoxylate ethers, thickeners, and pH-regulating agents (pH-buffers), preferably in a total amount of from 0.1% to 50% by weight,
in each case based on the total weight of the composition.

In more preferred embodiments, the herbicide concentrate compositions according to the present invention comprise
constituent (A) in a total amount of from 0.5% to 2.0% by weight,
constituent (B) in a total amount of from 20% to 50% by weight,
methyl cis-9-octadecenoate (methyl oleate) in a total amount of of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 3% by weight, preferably comprising a nonionic surfactant selected from the group of castor oil ethoxylates,
optionally an ionic surfactant selected from the group of sulfosuccinates in a total amount of at least 3% by weight,
other herbicides (constituent (C)), selected from iodosulfuron-methyl, iodosulfuron-methyl, sodium salt, thiencarbazone-methyl, and mixtures thereof, preferably in a total amount of from 0.5% to 8% by weight,
safeners (constituent D)) selected from (D1) mefenpyr-diethyl or (D4) cloquintocet-mexyl, preferably in a total amount of from 1% to 10% by weight,
and one, two or more further constituents selected from the group consisting of water (constituent (F)), preferably in a total amount of from 0.1% to 10% by weight,
other formulation adjuvants (constituent (H)) selected from the group consisting of isotridecanol ethoxylate (6EO) methyl ether, isotridecanol ethoxylate (15EO) methyl ether, lithium-hydroxy-octadecanoate, quaternium 18-hectorite, formic acid and disodium carbonate, preferably in a total amount of from 0.1% to 50% by weight,
in each case based on the total weight of the composition.

In more preferred embodiments, the herbicide concentrate compositions according to the present invention comprise
constituent (A) in a total amount of from 0.5% to 2.0% by weight,
constituent (B) in a total amount of from 20% to 50% by weight,
methyl cis-9-octadecenoate (methyl oleate) in a total amount of of from 20% to 50% by weight, wherein the ratio by weight of constituent (B) to methyl cis-9-octadecenoate (methyl oleate) is in the range of from 7 : 4 to 3 : 5, preferably greater than 1 : 1,
nonionic surfactants in a total amount of at least 3% by weight, preferably comprising a nonionic surfactant selected from the group of castor oil ethoxylates,
optionally an ionic surfactant selected from the group of sulfosuccinates in a total amount of at least 3% by weight,
other herbicides (constituent (C)), selected from iodosulfuron-methyl, iodosulfuron-methyl, sodium salt, thiencarbazone-methyl, and mixtures thereof, preferably in a total amount of from 0.5% to 8% by weight,
safeners (constituent D)) selected from (D1) mefenpyr-diethyl or (D4) cloquintocet-mexyl, preferably in a total amount of from 1% to 10% by weight,
and one, two or more further constituents selected from the group consisting of water (constituent (F)), preferably in a total amount of from 0.1% to 10% by weight,
other formulation adjuvants (constituent (H)) selected from the group consisting of isotridecanol ethoxylate (6EO) methyl ether, isotridecanol ethoxylate (15EO) methyl ether, lithium-hydroxy-octadecanoate, quaternium 18-hectorite, formic acid and disodium carbonate, preferably in a total amount of from 0.1% to 50% by weight,
in each case based on the total weight of the composition.

In all the above-mentioned preferred embodiments and in all the above-mentioned more preferred embodiments, the sum of the total amounts of constituent (B) and methyl cis-9-octadecenoate (methyl oleate) present in the herbicide concentrate compositions according to the present invention is 60% by weight or more, in each case based in the total weight of the composition.

Moreover, it is known that fatty alcohol polyglycol ethers such as nonionic or ionic fatty alcohol polyglycol ethers (for example fatty alcohol polyglycol ether sulfates) are also suitable as penetrants and synergists for a number of other herbicides, inter alia also herbicides from the group of the imidazolinones; (see, for example, EP-A-0502014).

The herbicidal effect of the herbicide concentrate compositions according to the invention can be increased further using vegetable oils. The term vegetable oils is to be understood as meaning oils from oil-plant species, such as soya oil, rapeseed oil, corn oil, sunflower oil, cottonseed oil, linseed oil, coconut oil, palm oil, safflower oil or castor oil, in particular rapeseed oil, and their transesterification products, for example alkyl esters, such as rapeseed oil methyl ester or rapeseed oil ethyl ester.

The vegetable oils are preferably esters of C₁₀-C₂₂-, preferably C₁₂-C₂₀-fatty acids. The C₁₀-C₂₂-fatty acid esters are, for example, esters of unsaturated or saturated C₁₀-C₂₂-fatty acids, in particular those with an even number of carbon atoms, for example erucic acid, lauric acid, palmitic acid and, in particular, C₁₈-fatty acids such as stearic acid, oleic acid, linoleic acid or linolenic acid.

Examples of C₁₀-C₂₂-fatty acid esters are esters obtained by reacting glycerol or glycol with the C₁₀-C₂₂-fatty acids as they exist, for example in oils from oil-plant species, or C₁-C₂₀-alkyl-C₁₀-C₂₂-fatty acid esters as can be obtained, for example, by transesterification of the abovementioned glycerol- or glycol-C₁₀-C₂₂-fatty acid esters with C₁-C₂₀-alcohols (for example methanol, ethanol, propanol or butanol). Transesterification can be carried out by known methods as are described, for example, in Römpp Chemie Lexikon, 9th edition, volume 2, page 1343, Thieme Verlag Stuttgart.

Preferred C₁-C₂₀-alkyl-C₁₀-C₂₂-fatty acid esters are the methyl, ethyl, propyl, butyl, 2-ethylhexyl and dodecyl esters. Preferred glycol- and glycerol-C₁₀-C₂₂-fatty acid esters are the uniform or mixed glycol esters and glycerol esters of C₁₀-C₂₂-fatty acids, in particular those fatty acids which have an even number of carbon atoms, for example erucic acid, lauric acid, palmitic acid and, in particular, C₁₈-fatty acids such as stearic acid, oleic acid, linolic acid or linolenic acid.

In a further embodiment, the present invention embraces combinations of herbicide concentrate compositions comprising constituents (A), (B) and optionally (C) and/or (D) with the vegetable oils mentioned above, such as rapeseed oil, preferably in the form of commercially available oil-containing formulation additives, in particular those based on rapeseed oil, in particular having as main constituent: rapeseed oil methyl ester, such as Actirob^{®}B (Novance, France), Rako-Binol^{®} (Bayer AG, Germany), Renol^{®} (Stefes, Germany), or Stefes Mero^{®} (Stefes, Germany).

For use, the herbicide concentrate compositions according to the present invention are diluted in the customary manner, for example using water in the case of wettable powders, emulsifiable concentrates, dispersions and water-dispersible granules.

In a further aspect, the present invention relates to tank-mix compositions comprising or consisting of
constituent (i) a herbicide concentrate composition of the present invention,
constituent (ii) water,
optionally constituent (iii) one or more fatty alcohol polyglycol ethers and/or one or more vegetable oils or esters thereof (preferably rapeseed oil methyl esters) and/or one or more alkali metal laurylether sulfates (preferably sodium laurylether sulfates),
wherein the total amount by weight of constituent (ii) to the total amount by weight of constituent (i) preferably is in the range of from 50 : 1 to 800 : 1, more preferably in the range of from 100 : 1 to 500 : 1, in each case based in the total weight of the tank-mix composition.

In another aspect the present invention relates to a method of preparing a tank-mix composition, characterized by the following steps:
(a) providing as constituent (i) a herbicide concentrate composition defined herein,
(b) as constituent (ii) water, wherein the total amount by weight of constituent (ii) to the total amount by weight of constituent (i) preferably is in the range of from 50 : 1 to 800 : 1, more preferably in the range of from 100 : 1 to 500 : 1,
(c) optionally providing as constituent (iii) one or more fatty alcohol polyglycol ethers and/or more vegetable oils or esters thereof (preferably rapeseed oil methyl esters) and/or one or more alkali metal laurylether sulfates (preferably sodium laurylether sulfates),
wherein constituents (i) and (ii), and optionally constituent (iii), are mixed in a tank.

The herbicide concentrate compositions or tank-mix compositions according to the present invention can be applied to the plants, parts of the plants, seeds of the plants or the area under cultivation (soil of a field), preferably to the green plants and parts of the plants and, if appropriate, additionally to the soil of the field.

A herbicide concentrate compositions according to the invention with the constituents (A) and (B) has the advantage of being easier to apply since the quantities of the constituents are already presented in the correct ratio to each other. Moreover, also the adjuvants in such composition can be matched optimally to each other. Such herbicide concentrate compositions are referred to in the art as premixes or in-can formulations. These are advantageous compared to a situation where the different constituents and adjuvants are added separately to a tank to form a spray-mixture. The herbicide concentrate compositions according to the invention *inter alia* provide an advantageous activity profile and/or high stability (chemically and physically), and are easy to use.

The compositions described in the context of the present invention are suitable for controlling harmful plants (i.e. undesired plant growth) in plant crops, for example in economically important plant crops such as cereals (such as wheat, barley, rye, oats, rice, corn, millet), sugar beet, sugar cane, oilseed rape, cotton and soybeans. Of particular interest is the application of compositions described in the context of the present invention in monocotyledonous plant crops such as cereals, for example wheat, barley, rye, oats, in particular hybrids thereof such as triticale, rice, corn and millet. These plant crops are also preferred for the herbicide concentrate compositions and tanx-mix compositions in the context of the present invention.

The compositions described in the conext of the present invention have an outstanding herbicidal activity against a broad spectrum of economically important weeds (harmful plants). The active compounds also act efficiently on perennial weeds which produce shoots from rhizomes, rootstocks or other perennial organs and which are difficult to control. In this context, it does not matter whether the substances are applied before sowing, pre-emergence or post-emergence. Post-emergence application, or early post-sowing pre-emergence application, is preferred.

Specifically, examples may be mentioned of some representatives of the monocotyledonous and dicotyledonous weed flora which can be controlled by the compositions according to the invention, without the enumeration being a restriction to certain species.

Examples of weed species on which the compositions described in the context of the present invention act efficiently are, from amongst the monocotyledonous weed species, for example Apera spp., such as *Apera spica venti,* Avena spp., such as *Avena fatua*, Alopecurus spp., such as *Alopecurus myosuroides,* Brachiaria spp., Digitaria spp., Lolium spp., such as *Lolium multiflorum* and *Lolium rigidum,* Echinochloa spp., Panicum spp., Phalaris spp., such as *Phalaris arundinacea* and *Phalaris canariensis,* Poa spp., such as *Poa annum,* Setaria spp., such as *Setaria pumila* and *Setaria viridis,* and also Bromus spp., such as *Bromus catharticus, Bromus secalinus, Bromus erectus, Bromus tectorum* and *Bromus japonicus,* and Cyperus species from the annual group, and, amongst the perennial species, Agropyron, Cynodon, Imperata and Sorghum and also perennial Cyperus species.

In the case of the dicotyledonous weed species, the spectrum of action extends to species such as, for example, Abutilon spp., Amaranthus spp., Chenopodium spp., Chrysanthemum spp., Galium spp., such as *Galium aparine*, Geranium spp., such as *Geranium dissectum,* Ipomoea spp., Kochia spp., Lamium spp., Matricaria spp., such as *Matricaria chamomilla*, Papaver spp., such as *Papaver rhoeas,* Pharbitis spp., Polygonum spp., such as *Polygonum convolvulus,* Sida spp., Sinapis spp., Solanum spp., Stellaria spp., Veronica spp., such as *Veronica hederifolia*, Viola spp., such as *Viola arvensis* and *Viola tricolor,* Xanthium spp., amongst the annuals, and Convolvulus, Cirsium, Rumex and Artemisia in the case of the perennial weeds.

The harmful plants (weed species) in the context of the present invention preferably are selected from Alopecurus spp. (in particular *Alopecurus myosuroides*)*,* Apera ssp. (in particular *Apera spica-venti*), Avena spp. (in particular *Avena fatua*), Brachiaria spp., Bromus spp. (in particular *Bromus catharticus, Bromus secalinus, Bromus erectus, Bromus tectorum* and *Bromus japonicas*)*,* Echinochloa spp., Galium spp. (in particular *Galium aparine*), Geranium spp. (in particular *Geranium dissectum),* Lolium spp. (in particular *Lolium multiflorum* and *Lolium rigidum*), Matricaria spp. (in particular *Matricaria chamomilla*), Papaver spp. (in particular *Papaver rhoeas*), Phalaris spp. (in particular *Phalaris arundinacea* and *Phalaris canariensis*), Poa spp. (in particular *Poa annum*), Polygonum spp. (in particular *Polygonum convolvulus*), Setaria spp. (in particular *Setaria pumila* and *Setaria viridis*), Veronica spp. (in particular *Veronica hederifolia*) and Viola spp. (in particular *Viola arvensis* and *Viola tricolor*)*.*

Therefore, in another aspect the present invention relates to a method for controlling harmful plants which comprises applying a herbicide concentrate composition or a tank-mix composition as defined herein onto the plants, parts of plants, plant seeds or the area where the plants grow, preferably for the selective control of harmful plants in plant crops.

Also, the present invention relates to the use of the herbicide concentrate compositions or the tank-mix compositions as defined herein for controlling harmful plants.

In particular, the present invention relates to a method and the use for controlling harmful plants, wherein the harmful plants preferably are selected from Alopecurus spp. (in particular *Alopecurus myosuroides*)*,* Apera ssp. (in particular *Apera spica-venti*), Avena spp. (in particular *Avena fatua*), Bromus spp. (in particular *Bromus catharticus, Bromus secalinus, Bromus erectus, Bromus tectorum* and *Bromus japonicas),* Galium spp. (in particular *Galium aparine*), Geranium spp. (in particular *Geranium dissectum*)*,* Lolium spp. (in particular *Lolium multiflorum* and *Lolium rigidum*)*,* Matricaria spp. (in particular *Matricaria chamomilla*), Papaver spp. (in particular *Papaver rhoeas*), Phalaris spp. (in particular *Phalaris arundinacea* and *Phalaris canariensis*), Poa spp. (in particular *Poa annum*), Polygonum spp. (in particular *Polygonum convolvulus*), Setaria spp. (in particular *Setaria pumila* and *Setaria viridis*)*,* Veronica spp. (in particular *Veronica hederifolia*) and Viola spp. (in particular *Viola arvensis* and *Viola tricolor*)*.*

If the compositions described in the context of the present invention are applied to the soil surface before germination, then the weed seedlings are either prevented completely from emerging, or the weeds grow until they have reached the cotyledon stage but then their growth stops, and, eventually, after three to four weeks have elapsed, they die completely.

If the constituents of the compositions described in the context of the present invention are applied post-emergence to the green parts of the plants, growth likewise stops drastically a very short time after the treatment and the weed plants remain at the growth stage of the point of time of application, or they die completely after a certain time, so that in this manner competition by the weeds, which is harmful to the crop plants, is eliminated at a very early point in time and in a sustained manner.

The compositions described in the context of the present invention are distinguished by a rapidly commencing and long-lasting herbicidal action. As a rule, the rainfastness of the active compounds in the compositions according to the invention is advantageous. A particular advantage is that the dosages of the herbicidally active ingredient(s) present in the compositions described in the context of the present invention can be adjusted to such a low quantity that their soil action is optimally low. Not only does this allow them to be employed in sensitive crops in the first place, but groundwater and surface water contaminations are virtually avoided. The compositions described in the context of the present invention allow the application rate of the herbicidally active compound(s) required to be reduced considerably.

The beneficial effects of the compositions described in the context of the present invention may allow the application rate to be reduced, a broader spectrum of weeds to be controlled, the herbicidal action to take place more rapidly, the duration of action to be longer and/or the harmful plants to be controlled better while using fewer applications.

The abovementioned properties and advantages are of benefit for weed control practice to keep agricultural crops free from undesired competing plants and thus to safeguard and/or increase the yields from the qualitative and quantitative point of view.

### Examples:

Unless indicated otherwise, all amounts and percentages refer to the weight.

The following materials and abbreviations were used in the examples below:

| **Material / Abbreviation** | **Ingredient** | **Function** | **Content of Ingredient in %** |
|---|---|---|---|
| IODOSULFURON-METHYL-SODIUM / IMS | Iodosulfuron-methyl, sodium salt | active ingredient | 100 |
| MESOSULFURON-METHYL-SODIUM / MSS | Mesosulfuron-methyl, sodium salt | active ingredient | 100 |
| MESOSULFURON-METHYL / MSM | Mesosulfuron-methyl | active ingredient | 100 |
| THIENCARBAZONE-METHYL / TCM | Thiencarbazone-methyl | active ingredient | 100 |
| MEFENPYR-DIETHYL / MPR | Mefenpyr-diethyl | safener | 100 |
| ETOCAS 10 | Castor oil ethoxylate (10EO) | surfactant | 100 |
| EMULSOGEN EL 400 | Castor oil ethoxylate (40EO) | surfactant | 100 |
| FORMIC ACID | Formic acid | pH buffer | 98-100 |
| SODIUM CARBONATE | Disodium carbonate | pH buffer | 100 |
| GENAPOL XM 060 | Isotridecanol ethoxylate (6EO) methyl ether | adjuvant | 100 |
| GENAPOL XM 150 | Isotridecanol ethoxylate (15EO) methyl ether | adjuvant | 100 |
| LIGASTAR LI 12 OXY | Lithium-hydroxy-octadecanoate | thickener | 100 |
| BENTONE 38 | Quaternium 18-hectorite | thickener | 100 |
| PROPYLENE CARBONATE | Propylene carbonate | solvent | 100 |
| DISFLAMOLL TOF / TEHP | Tris (2-ethylhexyl) phosphate | adjuvant | 100 |
| TRITON GR 7ME | Sodium-2-ethylhexylsulfosuccinate | surfactant | 64 |
| ATLOX LP 1 | Polyhydroxystearic acid | surfactant | 100 |
| SOPROPHOR BSU | Polyethylene glycol mono (tristyrylphenyl) ether 16 EO | surfactant | 100 |
| ISOBORNYL ACETATE | Isobornyl acetate | solvent | 100 |
| Radia 7066 | Methyl cis-9-octadecenoate (methyl oleate) | adjuvant | 100 |

### A. Formulation examples

**Table A1-1: OD-Formulations with MSS and MPR**

| Material / Formulation No. | **233245** | **232867** | **233251** |
|---|---|---|---|
| | g/L | g/L | g/L |
| MSS | 15.7 | 15.7 | 9.4 |
| MPR | 45.0 | 30.0 | 27.0 |
| EMULSOGEN EL 400 | 55.8 | 56.4 | 55.8 |
| FORMIC ACID | 0.01 | 2.1 | 0.01 |
| SODIUM CARBONATE | 0.01 | 0.01 | 0.01 |
| LIGASTAR LI 12 OXY | 0.0 | 28.2 | 0.0 |
| BENTONE 38 | 18.6 | 2.8 | 23.3 |
| PROPYLENE CARBONATE | 1.9 | 0.3 | 1.9 |
| TEHP | 372.0 | 376.0 | 372.0 |
| TRITON GR 7ME | 46.5 | 47.0 | 46.5 |
| Radia 7066 | 374.5 | 381.5 | 394.0 |

**Table A1-2: OD-Formulations with MSS and MPR**

| Material / Formulation No. | **232868** | **233275** | **232869** |
|---|---|---|---|
| | g/L | g/L | g/L |
| MSS | 9.4 | 6.3 | 6.3 |
| MPR | 18.0 | 18.0 | 12.0 |
| EMULSOGEN EL 400 | 55.8 | 55.8 | 55.8 |
| FORMIC ACID | 2.1 | 0.01 | 2.1 |
| SODIUM CARBONATE | 0.01 | 0.01 | 0.01 |
| LIGASTAR LI 12 OXY | 27.9 | 0 | 27.9 |
| BENTONE 38 | 2.8 | 23.3 | 2.8 |
| PROPYLENE CARBONATE | 0.3 | 2.3 | 0.3 |
| TEHP | 372.0 | 372.0 | 372.0 |
| TRITON GR 7ME | 46.5 | 46.5 | 46.5 |
| Radia 7066 | 395.3 | 405.8 | 404.4 |

**Table A2-1: OD-Formulations with IMS, MSS, TCM and MPR**

| Material / Formulation No. | **223238** | **225729** | **223235** |
|---|---|---|---|
| | g/L | g/L | g/L |
| IMS | 3.0 | 3.0 | 3.0 |
| MSS | 15.7 | 15.7 | 15.7 |
| TCM | 7.5 | 7.5 | 7.5 |
| MPR | 45.0 | 45.0 | 45.0 |
| EMULSOGEN EL 400 | 57.0 | 57.0 | 57.0 |
| FORMIC ACID | 1.0 | 1.0 | 1.0 |
| SODIUM CARBONATE | 0.01 | 0.01 | 0.01 |
| GENAPOL XM 060 | 0.0 | 0.0 | 142.5 |
| LIGASTAR LI 12 OXY | 28.5 | 28.5 | 28.5 |
| BENTONE 38 | 4.8 | 4.8 | 4.8 |
| PROPYLENE CARBONATE | 2.9 | 2.9 | 2.9 |
| TEHP | 285.0 | 475.0 | 142.5 |
| TRITON GR 7ME | 47.5 | 47.5 | 47.5 |
| Radia 7066 | 452.2 | 262.2 | 452.2 |

**Table A2-2: OD-Formulations with IMS, MSS, TCM and MPR**

| Material / Formulation No. | **230889** | **223318** | **223319** | **223310** |
|---|---|---|---|---|
| | g/L | g/L | g/L | g/L |
| IMS | 3.0 | 3.0 | 3.0 | 3.0 |
| MSS | 15.7 | 15.7 | 15.7 | 15.7 |
| TCM | 7.5 | 7.5 | 7.5 | 7.5 |
| MPR | 45.0 | 45.0 | 45.0 | 45.0 |
| EMULSOGEN EL 400 | 57.0 | 0.0 | 0.0 | 0.0 |
| FORMIC ACID | 1.0 | 1.0 | 1.0 | 1.0 |
| SODIUM CARBONATE | 0.01 | 2.9 | 2.9 | 2.9 |
| GENAPOL XM 060 | 190.0 | 0.0 | 0.0 | 142.5 |
| LIGASTAR LI 12 OXY | 28.5 | 47.5 | 47.5 | 47.5 |
| BENTONE 38 | 2.9 | 0.0 | 0.0 | 0.0 |
| PROPYLENE CARBONATE | 0.3 | 0.0 | 0.0 | 0.0 |
| TEHP | 380.0 | 285.0 | 637.1 | 142.5 |
| TRITON GR 7ME | 47.5 | 0.0 | 0.0 | 0.0 |
| ATLOX LP 1 | 0.0 | 0.4 | 0.4 | 0.4 |
| SOPROPHOR BSU | 0.0 | 190.0 | 190.0 | 190.0 |
| ISOBORNYL ACETATE | 0.0 | 352.1 | 0.0 | 352.1 |
| Radia 7066 | 171.7 | 0.0 | 0.0 | 0.0 |

**Table A2-3: OD-Formulations with IMS, MSS, TCM and MPR**

| Material / Formulation No. | **226017** | **226015** | **227032** |
|---|---|---|---|
| | g/L | g/L | g/L |
| IMS | 3.0 | 3.0 | 3.0 |
| MSS | 15.7 | 15.7 | 15.7 |
| TCM | 5.0 | 5.0 | 5.0 |
| MPR | 45.0 | 45.0 | 45.0 |
| EMULSOGEN EL 400 | 57.0 | 57.0 | 0.0 |
| ETOCAS 10 | 0.0 | 0.0 | 47.5 |
| FORMIC ACID | 1.0 | 1.0 | 1.0 |
| SODIUM CARBONATE | 0.01 | 0.01 | 0.01 |
| GENAPOL XM 060 | 0.0 | 237.5 | 190.0 |
| LIGASTAR LI 12 OXY | 28.5 | 28.5 | 28.5 |
| BENTONE 38 | 2.9 | 2.9 | 2.85 |
| PROPYLENE CARBONATE | 2.9 | 2.9 | 0.285 |
| TEHP | 475.0 | 237.5 | 380.0 |
| TRITON GR 7ME | 47.5 | 47.5 | 47.5 |
| Radia 7066 | 266.6 | 267.6 | 184.6 |

**Table A2-4: OD-Formulations with IMS, MSS, TCM and MPR**

| Material / Formulation No. | **226041** | **226042** | **226821** |
|---|---|---|---|
| | g/L | g/L | g/L |
| IMS | 3.0 | 3.0 | 3.0 |
| MSS | 15.7 | 15.7 | 15.7 |
| TCM | 5.0 | 5.0 | 5.0 |
| MPR | 45.0 | 45.0 | 45.0 |
| ETOCAS 10 | 47.5 | 47.5 | 47.5 |
| FORMIC ACID | 1.0 | 1.0 | 1.0 |
| SODIUM CARBONATE | 0.01 | 0.01 | 0.01 |
| GENAPOL XM 150 | 237.5 | 190.0 | 142.5 |
| LIGASTAR LI 12 OXY | 28.5 | 28.5 | 28.5 |
| TEHP | 237.5 | 190.0 | 285.0 |
| TRITON GR 7ME | 47.5 | 47.5 | 47.5 |
| Radia 7066 | 282.8 | 377.8 | 330.3 |

**Table A2-5: OD-Formulations with IMS, MSS, TCM and MPR**

| Material / Formulation No. | **230581** | **230605** |
|---|---|---|
| | g/L | g/L |
| IMS | 3.0 | 3.0 |
| MSS | 12.5 | 12.5 |
| TCM | 5.0 | 5.0 |
| MPR | 45.0 | 45.0 |
| EMULSOGEN EL 400 | 57.0 | 47.5 |
| FORMIC ACID | 1.0 | 1.0 |
| SODIUM CARBONATE | 0.01 | 0.01 |
| GENAPOL XM 060 | 0.0 | 190.0 |
| LIGASTAR LI 12 OXY | 28.5 | 28.5 |
| BENTONE 38 | 2.9 | 2.9 |
| PROPYLENE CARBONATE | 2.9 | 2.9 |
| TEHP | 475.0 | 380.0 |
| TRITON GR 7ME | 47.5 | 47.5 |
| Radia 7066 | 270.4 | 187.8 |

**Table A2-6: OD-Formulations with IMS, MSS, TCM and MPR**

| Material / Formulation No. | **230887** | **230890** | **230603** |
|---|---|---|---|
| | g/L | g/L | g/L |
| IMS | 3.0 | 3.0 | 3.0 |
| MSS | 9.4 | 9.4 | 9.4 |
| TCM | 7.5 | 7.5 | 5.0 |
| MPR | 45.0 | 45.0 | 45.0 |
| EMULSOGEN EL 400 | 57.0 | 57.0 | 57.0 |
| FORMIC ACID | 1.0 | 1.0 | 1.0 |
| SODIUM CARBONATE | 0.01 | 0.01 | 0.01 |
| GENAPOL XM 060 | 0.0 | 190.0 | 0.0 |
| LIGASTAR LI 12 OXY | 28.5 | 28.5 | 28.5 |
| BENTONE 38 | 2.85 | 2.85 | 2.85 |
| PROPYLENE CARBONATE | 2.85 | 2.85 | 2.85 |
| TEHP | 475.0 | 380.0 | 475.0 |
| TRITON GR 7ME | 47.5 | 47.5 | 47.5 |
| Radia 7066 | 270.4 | 178.0 | 273.0 |

**Table A2-7: OD-Formulations with IMS, MSS, TCM and MPR**

| Material / Formulation No. | **230606** | **230888** | **230891** | **230783** |
|---|---|---|---|---|
| | g/L | g/L | g/L | g/L |
| IMS | 3.0 | 3.0 | 3.0 | 3.0 |
| MSS | 9.4 | 6.3 | 6.3 | 6.3 |
| TCM | 5.0 | 7.5 | 7.5 | 5.0 |
| MPR | 45.0 | 45.0 | 45.0 | 45.0 |
| EMULSOGEN EL 400 | 47.0 | 57.0 | 57.0 | 47.0 |
| FORMIC ACID | 1.0 | 1.0 | 1.0 | 1.0 |
| SODIUM CARBONATE | 0.01 | 0.01 | 0.01 | 0.01 |
| GENAPOL XM 060 | 190.0 | 0.0 | 190.0 | 190.0 |
| LIGASTAR LI 12 OXY | 28.5 | 28.5 | 28.5 | 28.5 |
| BENTONE 38 | 2.85 | 2.85 | 2.85 | 2.85 |
| PROPYLENE CARBONATE | 2.85 | 2.85 | 2.85 | 2.85 |
| TEHP | 380.0 | 475.0 | 380.0 | 380.0 |
| TRITON GR 7ME | 47.5 | 47.5 | 47.5 | 47.5 |
| Radia 7066 | 200.0 | 273.5 | 181.1 | 194.1 |

**Table A3-1: OD-Formulations with MSS, TCM and MPR**

| Material / Formulation No. | **220524** | **220523** | **227043** |
|---|---|---|---|
| | g/L | g/L | g/L |
| MSS | 15.7 | 15.7 | 15.7 |
| TCM | 5.0 | 5.0 | 5.0 |
| MPR | 45.0 | 37.5 | 37.5 |
| EMULSOGEN EL 400 | 57.0 | 57.0 | 55.8 |
| FORMIC ACID | 1.0 | 1.0 | 0.01 |
| SODIUM CARBONATE | 0.01 | 0.01 | 0.01 |
| GENAPOL XM 060 | 142.5 | 142.5 | 0.0 |
| LIGASTAR LI 12 OXY | 0.0 | 0.0 | 27.9 |
| BENTONE 38 | 9.5 | 9.5 | 2.8 |
| PROPYLENE CARBONATE | 2.9 | 2.9 | 0.3 |
| TEHP | 142.5 | 142.5 | 465.0 |
| TRITON GR 7ME | 47.5 | 47.5 | 46.5 |
| Radia 7066 | 481.5 | 489.0 | 273.5 |

**Table A3-2: OD-Formulations with MSS, TCM and MPR**

| Material / Formulation No. | **227044** | **227050** | **230881** |
|---|---|---|---|
| | g/L | g/L | g/L |
| MSS | 15.7 | 15.7 | 15.7 |
| TCM | 5.0 | 5.0 | 5.0 |
| MPR | 37.5 | 37.5 | 37.5 |
| EMULSOGEN EL 400 | 46.5 | 0.0 | 57.0 |
| ETOCAS 10 | 0.0 | 47.5 | 0.0 |
| FORMIC ACID | 0.01 | 0.01 | 2.1 |
| SODIUM CARBONATE | 0.01 | 0.01 | 0.01 |
| GENAPOL XM 060 | 186.0 | 0.0 | 190.0 |
| GENAPOL XM 150 | 0.0 | 142.5 | 0.0 |
| LIGASTAR LI 12 OXY | 27.9 | 28.5 | 28.5 |
| BENTONE 38 | 2.8 | 0.0 | 2.9 |
| PROPYLENE CARBONATE | 0.3 | 0.0 | 0.3 |
| TEHP | 372.0 | 285.0 | 380.0 |
| TRITON GR 7ME | 46.5 | 47.5 | 47.5 |
| Radia 7066 | 189.8 | 340.8 | 183.6 |

**Table A3-3: OD-Formulations with MSS, TCM and MPR**

| Material / Formulation No. | **230884** | **232850** | **232854** |
|---|---|---|---|
| | g/L | g/L | g/L |
| MSS | 15.7 | 15.7 | 15.7 |
| TCM | 5.0 | 5.0 | 5.0 |
| MPR | 37.5 | 37.5 | 37.5 |
| EMULSOGEN EL 400 | 57.0 | 56.4 | 55.8 |
| FORMIC ACID | 2.1 | 2.1 | 2.0 |
| SODIUM CARBONATE | 0.01 | 0.01 | 0.01 |
| LIGASTAR LI 12 OXY | 28.5 | 28.2 | 27.9 |
| BENTONE 38 | 2.9 | 2.9 | 2.8 |
| PROPYLENE CARBONATE | 0.3 | 0.3 | 0.3 |
| TEHP | 475.0 | 376.0 | 279.0 |
| TRITON GR 7ME | 47.5 | 47.0 | 46.5 |
| Radia 7066 | 278.6 | 369.0 | 457.5 |

**Table A3-4: OD-Formulations with MSS, TCM and MPR**

| Material / Formulation No. | **230613** | **230617** |
|---|---|---|
| | g/L | g/L |
| MSS | 12.5 | 12.5 |
| TCM | 5.0 | 5.0 |
| MPR | 37.5 | 37.5 |
| EMULSOGEN EL 400 | 55.8 | 46.5 |
| FORMIC ACID | 0.01 | 0.01 |
| SODIUM CARBONATE | 0.01 | 0.01 |
| GENAPOL XM 060 | 0.0 | 186.0 |
| LIGASTAR LI 12 OXY | 27.9 | 27.9 |
| BENTONE 38 | 2.8 | 2.8 |
| PROPYLENE CARBONATE | 0.3 | 0.3 |
| TEHP | 465.0 | 372.0 |
| TRITON GR 7ME | 46.5 | 46.5 |
| Radia 7066 | 276.7 | 193.0 |

**Table A3-5: OD-Formulations with MSS, TCM and MPR**

| Material / Formulation No. | **230614** | **230618** | **230882** |
|---|---|---|---|
| | g/L | g/L | g/L |
| MSS | 9.4 | 9.4 | 9.4 |
| TCM | 5.0 | 5.0 | 5.0 |
| MPR | 37.5 | 37.5 | 37.5 |
| EMULSOGEN EL 400 | 55.8 | 55.8 | 57 |
| FORMIC ACID | 0.01 | 0.01 | 2.1 |
| SODIUM CARBONATE | 0.01 | 0.01 | 0.01 |
| GENAPOL XM 060 | 0.0 | 186.0 | 190.0 |
| LIGASTAR LI 12 OXY | 27.9 | 27.9 | 28.5 |
| BENTONE 38 | 2.8 | 2.8 | 2.9 |
| PROPYLENE CARBONATE | 0.3 | 0.3 | 0.3 |
| TEHP | 465.0 | 372.0 | 380.0 |
| TRITON GR 7ME | 46.5 | 46.5 | 47.5 |
| Radia 7066 | 289.8 | 196.1 | 189.9 |

**Table A3-6: OD-Formulations with MSS, TCM and MPR**

| Material / Formulation No. | **230885** | **233043** | **233047** |
|---|---|---|---|
| | g/L | g/L | g/L |
| MSS | 9.4 | 9.4 | 9.4 |
| TCM | 5.0 | 5.0 | 5.0 |
| MPR | 37.5 | 37.5 | 37.5 |
| EMULSOGEN EL 400 | 57.0 | 56.4 | 56.4 |
| FORMIC ACID | 2.1 | 2.1 | 2.1 |
| SODIUM CARBONATE | 0.01 | 0.01 | 0.01 |
| LIGASTAR LI 12 OXY | 28.5 | 28.2 | 28.2 |
| BENTONE 38 | 2.9 | 2.8 | 2.8 |
| PROPYLENE CARBONATE | 0.3 | 0.3 | 0.3 |
| TEHP | 475.0 | 470.0 | 376.0 |
| TRITON GR 7ME | 47.5 | 47.0 | 47.0 |
| Radia 7066 | 284.9 | 281.3 | 375.3 |

**Table A3-7: OD-Formulations with MSS, TCM and MPR**

| Material / Formulation No. | **233049** | **232855** | **232856** | **232857** |
|---|---|---|---|---|
| | g/L | g/L | g/L | g/L |
| MSS | 9.4 | 9.4 | 9.4 | 9.4 |
| TCM | 5.0 | 5.0 | 5.0 | 5.0 |
| MPR | 37.5 | 22.5 | 22.5 | 22.5 |
| EMULSOGEN EL 400 | 55.8 | 55.8 | 55.8 | 55.2 |
| FORMIC ACID | 2.1 | 2.1 | 2.1 | 2.0 |
| SODIUM CARBONATE | 0.01 | 0.01 | 0.01 | 0.01 |
| LIGASTAR LI 12 OXY | 27.9 | 27.9 | 27.9 | 27.6 |
| BENTONE 38 | 2.8 | 2.8 | 2.8 | 2.8 |
| PROPYLENE CARBONATE | 0.3 | 0.3 | 0.3 | 0.3 |
| TEHP | 376.0 | 465.0 | 372.0 | 276.0 |
| TRITON GR 7ME | 46.5 | 46.5 | 46.5 | 46.0 |
| Radia 7066 | 463.8 | 292.8 | 385.8 | 473.2 |

**Table A3-8: OD-Formulations with MSS, TCM and MPR**

| Material / Formulation No. | **230878** | **230883** | **233048** |
|---|---|---|---|
| | g/L | g/L | g/L |
| MSS | 6.3 | 6.3 | 6.3 |
| TCM | 5.0 | 5.0 | 5.0 |
| MPR | 37.5 | 37.5 | 37.5 |
| EMULSOGEN EL 400 | 56.4 | 57.0 | 56.4 |
| FORMIC ACID | 2.1 | 2.1 | 2.1 |
| SODIUM CARBONATE | 0.01 | 0.01 | 0.01 |
| GENAPOL XM 060 | 0.0 | 190 | 0.0 |
| LIGASTAR LI 12 OXY | 28.2 | 28.5 | 28.2 |
| BENTONE 38 | 2.8 | 2.9 | 2.8 |
| PROPYLENE CARBONATE | 0.3 | 0.3 | 0.3 |
| TEHP | 470.0 | 380.0 | 376.0 |
| TRITON GR 7ME | 47.0 | 47.5 | 47.0 |
| Radia 7066 | 284.4 | 193.0 | 378.4 |

**Table A3-9: OD-Formulations with MSS, TCM and MPR**

| Material / Formulation No. | **233050** | **232859** | **232860** | **232862** |
|---|---|---|---|---|
| | g/L | g/L | g/L | g/L |
| MSS | 6.3 | 6.3 | 6.3 | 6.3 |
| TCM | 5.0 | 5.0 | 5.0 | 5.0 |
| MPR | 37.5 | 15.0 | 15.0 | 15.0 |
| EMULSOGEN EL 400 | 55.8 | 56.4 | 55.8 | 55.2 |
| FORMIC ACID | 2.0 | 2.1 | 2.0 | 2.0 |
| SODIUM CARBONATE | 0.01 | 0.01 | 0.01 | 0.01 |
| LIGASTAR LI 12 OXY | 27.9 | 28.2 | 27.9 | 27.6 |
| BENTONE 38 | 2.8 | 2.8 | 2.8 | 2.8 |
| PROPYLENE CARBONATE | 0.3 | 0.3 | 0.3 | 0.3 |
| TEHP | 279.0 | 470.0 | 372.0 | 276.0 |
| TRITON GR 7ME | 46.5 | 47.0 | 46.5 | 46.0 |
| Radia 7066 | 466.9 | 306.9 | 396.4 | 483.9 |

### B. Biological Examples

### Greenhouse trials (not according to the invention)

The % damage (injury) indicated refers to the maximum damage observed in the respective crop.

**Table G1: Greenhouse selectivity trials with MSM, IMS and MPR - wheat crop injury post-emergence when the respective material was applied at a plant height of about 35 cm (TRZAW, winter wheat) or of about 40 cm (TRZDU, durum wheat)**

| Material | Dose rate | Injury TRZAW (variety: Dekan) | Injury TRZDU |
|---|---|---|---|
| MSM + IMS + MPR | 7.5 + 1.5 + 22.5 g/ha | 0% | 0% |
| (MSM + IMS + MPR) + G-TEHP* | (7.5 + 1.5 + 22.5 g/ha) + 2 kg/ha | 21% | 15% |
| (MSM + IMS + MPR) + TBEP^{#} | (7.5 + 1.5 + 22.5 g/ha) 2 kg/ha | 0% | 1% |

| | | | |
|---|---|---|---|
| *: G-TEHP: 80% TEHP, 10% Genapol^{®} LRO paste and 10% Lucramul^{®} CO Genapol^{®} LRO paste is C₁₂-C₁₄ fatty alcohol diethylene glycol ether sulfate, sodium salt, 70% in water, commercially available Lucramul^{®} CO is a castor oil ethoxylate (nonionic emulsifier), commercially available ^{#}: TBEP: Tri(butoxyethyl) phosphate, commercially available | | | |

### Field/outdoor trials

After the harmful plants had emerged, they were treated, as a rule at the 2- to 4-leaf stage, with the respective materials as indicated at a water application rate of 100 to 400 l/ha.

After the treatment (typically 3 - 6 weeks after application, depending on the environmental conditions), the herbidical activity of respective material was scored visually at the same time by comparing the differently treated plots with the untreated control plots. Damage and development of all above-ground parts of the plants was recorded. Scoring was done on a percentage scale (100% action = all plants dead; 50% action = 50% of the plants and green plant parts dead; 0% action = no discernible action = like control plot). The score figures of in each case 3, 6 or 8 plots were averaged across different locations in spring in six different European countries.

The dose rates of herbicidal ingedients used in each case are indicated for the respective active ingredient and refer to the amount of active ingredient per hectare (g/ha).

The herbicidal effects observed for the herbicide(s) are indicated in % activity against the respective weed. The % damage (injury) indicated refers to the maximum damage observed in the winter wheat (TRZAW) crop.

**Table Ref-F1 (not according to the invention): Field selectivity trials with MSM and MPR - winter wheat (TRZAW) crop injury (damage) post-emergence**

| Material | Dose rate | Damage TRZAW (variety: Potenzial) |
|---|---|---|
| MSM + MPR | 6 + 18 g/ha | 3% |
| (MSM + MPR) + MERO | (6 + 18 g/ha) + 1.5 kg/ha | 3% |
| (MSM + MPR) + MERO + G-TEHP* | (6 + 18 g/ha) + 1.5 L/ha + 1 kg/ha | 7% |

| | | |
|---|---|---|
| MERO: Rapeseed oil methyl ester *: G-TEHP: 80% TEHP, 10% Genapol^{®} LRO paste and 10% Lucramul^{®} CO 30 Genapol^{®} LRO paste is C₁₂-C₁₄ fatty alcohol diethylene glycol ether sulfate, sodium salt, 70% in water, commercially available Lucramul^{®} CO is a castor oil ethoxylate (nonionic emulsifier), commercially available | | |

### Herbicidal activity field trials:

### Weeds tested:

ALOMY: *Alopecurus myosuroides*
LOLSS: Lolium sp.
BROSS: Bromus sp.

**Table F1: Field weed control trials with MSM and MPR**

| Material | Dose rate | % control | % control | % control |
|---|---|---|---|---|
| | MSM + MPR | ALOMY | LOLSS | BROSS |
| **233245** (Table A1-1) | 15.7 + 45 g/ha | 98% | 82% | 79% |
| Osprey^{®} WG + BioPower^{®}* | 15 + 30 g/ha + 1L BioPower^{®}* /ha | 94% | 86% | 82% |
| Sigma^{®} OD | 15 + 45 g/ha | 96% | 69% | 49% |

| | | | | |
|---|---|---|---|---|
| Osprey^{®} (commercially available herbicide): mesosulfuron-methyl + mefenpyr-diethyl WG 13.5 (4.5+9 g/kg) *: BioPower^{®}: sodium laurylether sulfates, commercially available Sigma OD^{®} (commercially available herbicide): mesosulfuron-methyl + mefenpyr-diethyl OD 120 (30+90 g/L) | | | | |

**Table F2-1: Field weed control trials with MSM, TCM and MPR**

| Material | Dose rate | % control | % control |
|---|---|---|---|
| | MSM + TCM + MPR | ALOMY | LOLSS |
| **230884** (Table A3-3) | 15.7 + 5 + 37.5 g/ha | 98% | 87% |
| **232850** (Table A3-3) | 15.7 + 5 + 37.5 g/ha | 97% | 86% |
| **232854** (Table A3-3) | 15.7 + 5 + 37.5 g/ha | 98% | 84% |
| **233043** (Table A3-6) | 9.4 + 5 + 37.5 g/ha | 98% | 82% |
| **233047** (Table A3-6) | 9.4 + 5 + 37.5 g/ha | 96% | 81% |
| **233049** (Table A3-7) | 9.4 + 5 + 37.5 g/ha | 94% | 78% |
| **230878** (Table A3-8) | 6.3 + 5 + 37.5 g/ha | 96% | 80% |
| **233048** (Table A3-8) | 6.3 + 5 + 37.5 g/ha | 92% | 79% |
| **233050** (Table A3-9) | 6.3 + 5 + 37.5 g/ha | 92% | 71% |
| Incelo^{®} + BioPower^{®}* | 15 + 5 + 37.5 g/ha + 1L BioPower^{®}* /ha | 96% | 83% |

| | | | |
|---|---|---|---|
| Incelo^{®} (commercially available herbicide): mesosulfuron-methyl + thiencarbazone-methyl + mefenpyr-diethyl WG (45+15+112.5 g/kg) *: BioPower^{®}: sodium laurylether sulfates, commercially available | | | |

**Table F2-2: Field weed control trials with MSM, TCM and MPR**

| Material | Dose rate | % control | % control |
|---|---|---|---|
| | MSM + TCM + MPR | ALOMY | LOLSS |
| **232855** (Table A3-7) | 9.4 + 5 + 22.5 g/ha | 98% | 85% |
| **232856** (Table A3-7) | 9.4 + 5 + 22.5 g/ha | 96% | 83% |
| **232857** (Table A3-7) | 9.4 + 5 + 22.5 g/ha | 97% | 81% |
| **232859** (Table A3-9) | 6.3 + 5 + 15 g/ha | 94% | 73% |
| **232860** (Table A3-9) | 6.3 + 5 + 15 g/ha | 94% | 77% |
| **232862** (Table A3-9) | 6.3 + 5 + 15 g/ha | 96% | 80% |
| Incelo^{®} + BioPower^{®}* | 15 + 5 + 37.5 g/ha + 1L BioPower^{®}* /ha | 96% | 83% |

| | | | |
|---|---|---|---|
| Incelo^{®} (commercially available herbicide): mesosulfuron-methyl + thiencarbazone-methyl + mefenpyr-diethyl WG (45+15+112.5 g/kg) *: BioPower^{®}: sodium laurylether sulfates, commercially available | | | |

The compositions according to the present invention tested in the field generally showed better grass control than a mixture of Incelo^{®} and BioPower^{®}.

Further, the compositions according to the present invention tested in the field showed similar crop safety (crop injury) in winter wheat (TRZAW) post-emergence in comparison to the commercially available herbicide Incelo^{®} (mesosulfuron-methyl + thiencarbazone-methyl + mefenpyr-diethyl WG (45+15+112.5 g/kg) in combination with BioPower^{®} (sodium laurylether sulfates).

## Claims

1. Composition comprising an effective amount of constituent (A), wherein
(A) denotes mesosulfuron-methyl and/or a salt thereof,
(B) denotes tris(2-ethylhexyl) phosphate (TEHP),
and one or more further compounds selected from the group consisting of constituents (C) and constituent (D):
(C) one or more further herbicides selected from the group consisting of
(C1) iodosulfuron-methyl and salts thereof, (C2) thiencarbazone-methyl and salts thereof, (C3) amidosulfuron and salts thereof, (C4) foramsulfuron and salts thereof, (C5) propoxycarbazone and salts thereof, and (C6) diflufenican,
(D) one or more safeners,
wherein the ratio by weight of the total amount of constituent (A) to the total amount of constituent (B) is in the range of from 1 : 2 to 1 : 100, based on the total weight of the composition, and wherein the composition comprises
constituent (A) in a total amount of from 0.5% to 5% by weight,
constituent (B) in a total amount of from 10% to 50% by weight,
methyl cis-9-octadecenoate (methyl oleate) in a total amount of from 10% to 50% by weight, surfactants in a total amount of at least 3% by weight,
and preferably one, two, three or more further constituents selected from the group consisting of
other herbicides (constituent (C)), preferably in a total amount of from 0.5% to 12% by weight, safeners (constituent D)), preferably in a total amount of from 0.75% to 15% by weight, water (constituent (F)), preferably in a total amount of from 0.1% to 30% by weight,
other formulation adjuvants (constituent (H)), preferably in a total amount of from 0.1% to 50% by weight,
in each case based on the total weight of the composition.

2. The composition as claimed in claim 1, wherein the composition comprises
constituent (A) in a total amount of from 0.5% to 5% by weight,
constituent (B) in a total amount of from 20% to 50% by weight,
methyl cis-9-octadecenoate (methyl oleate) in a total amount of from 20% to 50% by weight,
surfactants in a total amount of at least 3% by weight, preferably selected from the group consisting of castor oil ethoxylates, alkyl sulfosuccinates, and polyethylene glycol mono (tristyrylphenyl) ethers,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight, water (constituent (F)), preferably in a total amount of from 0.1% to 30% by weight, other formulation adjuvants (constituent (H)), preferably in a total amount of from 0.1% to 50% by weight,
in each case based on the total weight of the composition.

3. The composition as claimed in claim 1, wherein the composition comprises
constituent (A) in a total amount of from 0.5% to 4% by weight,
constituent (B) in a total amount of from 20% to 50% by weight,
methyl cis-9-octadecenoate (methyl oleate) in a total amount of from 20% to 50% by weight, nonionic surfactants in a total amount of at least 3% by weight, preferably comprising a nonionic surfactant selected from the group of castor oil ethoxylates,
one or more ionic surfactants selected from the group of sulfosuccinates, preferably sodium-2-ethylhexylsulfosuccinate,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight, water (constituent (F)), preferably in a total amount of from 0.1% to 30% by weight, other formulation adjuvants (constituent (H)), preferably in a total amount of from 0.1% to 50% by weight,
in each case based on the total weight of the composition.

4. The composition as claimed in claim 1, wherein the composition comprises
constituent (A) in a total amount of from 0.5% to 4% by weight,
constituent (B) in a total amount of from 20% to 50% by weight,
methyl cis-9-octadecenoate (methyl oleate) in a total amount of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 3% by weight, wherein said nonionic surfactants comprise or consist of surfactants selected from the group of castor oil ethoxylates, one or more ionic surfactants selected from the group of sulfosuccinates, preferably sodium-2-ethylhexylsulfosuccinate,
wherein the ratio of the total amount of nonionic surfactants to the total amount of ionic surfactants preferably is in the range of from 3 : 1 to 1 : 3,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight, water (constituent (F)), preferably in a total amount of from 0.1% to 30% by weight,
other formulation adjuvants (constituent (H)), preferably in a total amount of from 0.1% to 50% by weight,
in each case based on the total weight of the composition.

5. The composition as claimed in claim 1, wherein the composition comprises
constituent (A) in a total amount of from 0.5% to 3% by weight,
constituent (B) in a total amount of from 20% to 50% by weight,
methyl cis-9-octadecenoate (methyl oleate) in a total amount of from 20% to 50% by weight, wherein the ratio by weight of constituent (B) to methyl cis-9-octadecenoate (methyl oleate) is in the range of 2 : 1 to 1 : 2,
nonionic surfactants in a total amount of at least 3% by weight, wherein said nonionic surfactants comprise or consist of surfactants selected from the group of castor oil ethoxylates, one or more ionic surfactants comprising or consisting of sodium-2-ethylhexylsulfosuccinate, preferably in a total amount of at least 3% by weight,
wherein the ratio of the total amount of nonionic surfactants to the total amount of ionic surfactants preferably is in the range of from 2 : 1 to 1 : 2,
and one, two, three or more further constituents selected from the group consisting of other herbicides (constituent (C)), preferably in a total amount of from 0.5% to 12% by weight, safeners (constituent D)), preferably in a total amount of from 0.75% to 15% by weight, water (constituent (F)), preferably in a total amount of from 0.1% to 30% by weight,
other formulation adjuvants (constituent (H)), preferably in a total amount of from 0.1% to 50% by weight,
in each case based on the total weight of the composition.

6. The composition as claimed in one or more of claims 1 to 5, wherein the composition is free of pinoxaden and preferably is free of a C₁-C₆ alkyl methacrylate.

7. The composition as claimed in one or more of claims 1 to 6, wherein the constituents (A) and (C) are the only herbicides in said composition.

8. The composition as claimed in one or more of claims 1 to 7, wherein the ratio by weight of the total amount of constituent (A) to the total amount of constituent (B) is in the range of from 1: 4 to 1 : 60, preferably in the range of from 1 : 4 to 1 : 50, more preferably in the range of from 1 : 4 to 1 : 40 , or in the range of from 1 : 5 to 1 : 30, in each case based on the total weight of the composition.

9. The composition as claimed in one or more of claims 1 to 8, wherein the safener of constituent (D) is selected from the group consisting of (D1) mefenpyr, its esters and/or salts thereof (preferably mefenpyr-diethyl), (D2) isoxadifen, its esters and/or salts thereof (preferably isoxadifen-ethyl), (D3) cyprosulfamide, its esters and/or salts thereof (preferably cyprosulfamide), (D4) cloquintocet, its esters and/or salts thereof (preferably cloquintocet-mexyl), (D5) fenchlorazol, its esters and/or salts thereof (preferably fenchlorazol), and (D6) furilazol, its esters and/or salts thereof (preferably furilazol).

10. Tank-mix composition comprising or consisting of
constituent (i) a composition as claimed in one or more of claims 1 to 9,
constituent (ii) water,
and optionally constituent (iii) one or more fatty alcohol polyglycol ethers and/or one or more vegetable oils or esters thereof (preferably rapeseed oil methyl esters) and/or one or more alkali metal laurylether sulfates (preferably sodium laurylether sulfates),
wherein the total amount by weight of constituent (ii) to the total amount by weight of constituent (i) preferably is in the range of from 50 : 1 to 800 : 1, more preferably in the range of from 100 : 1 to 500 : 1, in each case based in the total weight of the tank-mix composition.

11. A method for controlling harmful plants which comprises applying the composition as defined in one or more of claims 1 to 9 or the tank-mix composition as defined in claim 10 onto the plants, parts of plants, plant seeds or the area where the plants grow, wherein the application rate of constituent (A) preferably is in the range of from 0.5 to 50 g/ha, more preferably in the range of from 1 to 25 g/ha, and particularly preferably in the range of from 2 to 20 g/ha.

12. The method as claimed in claim 11 for the selective control of harmful plants in plant crops.

13. Use of the composition defined in any of claims 1 to 9 or the tank-mix composition defined in claim 10 for controlling harmful plants, wherein the application rate of constituent (A) preferably is in the range of from 0.5 to 50 g/ha, more preferably in the range of from 1 to 25 g/ha, and particularly preferably in the range of from 2 to 20 g/ha.

14. The method as defined in any of claims 11 or 12 or the use as defined in claim 13, wherein the harmful plants are selected from Alopecurus spp., Apera ssp., Avena spp., Brachiaria spp., Bromus spp., Echinochloa spp., Galium spp., Geranium spp., Lolium spp., Matricaria spp., Papaver spp., Phalaris spp., Poa spp., Polygonum spp., Setaria spp., Veronica spp. and Viola spp..

15. Method of preparing a tank-mix composition, **characterized by** the following steps:
(a) providing as constituent (i) a composition defined in any of claims 1 to 9,
(b) providing as constituent (ii) water, wherein the total amount by weight of constituent (ii) to the total amount by weight of constituent (i) preferably is in the range of from 50 : 1 to 800 : 1, more preferably in the range of from 100 : 1 to 500 : 1,
(c) optionally providing as constituent (iii) one or more fatty alcohol polyglycol ethers and/or more vegetable oils or esters thereof (preferably rapeseed oil methyl esters) and/or one or more alkali metal laurylether sulfates (preferably sodium laurylether sulfates),
wherein constituents (i) and (ii), and optionally constituent (iii), are mixed in a tank.

## Patentansprüche

1. Zusammensetzung, umfassend eine wirksame Menge des Bestandteils (A), wobei
(A) Mesosulfuron-Methyl und/oder ein Salz davon bedeutet,
(B) Tris(2-ethylhexyl)phosphat (TEHP) bedeutet,
und eine oder mehrere weitere Verbindungen ausgewählt aus der Gruppe bestehend aus den Bestandteilen (C) und dem Bestandteil (D):
(C) ein oder mehrere weitere Herbizide, ausgewählt aus der Gruppe bestehend aus
(C1) Iodosulfuron-methyl und Salzen davon, (C2) Thiencarbazon-methyl und Salzen davon, (C3) Amidosulfuron und Salzen davon, (C4) Foramsulfuron und Salzen davon, (C5) Propoxycarbazon und Salzen davon, und (C6) Diflufenican,
(D) einen oder mehrere Safener,
wobei das Gewichtsverhältnis der Gesamtmenge des Bestandteils (A) zur Gesamtmenge des Bestandteils (B) im Bereich von 1:2 bis 1:100 liegt, bezogen auf das Gesamtgewicht der Zusammensetzung, und wobei die Zusammensetzung umfasst
Bestandteil (A) in einer Gesamtmenge von 0,5 bis 5 Gew.-%,
Bestandteil (B) in einer Gesamtmenge von 10 Gew.-% bis 50 Gew.-%, Methyl-cis-9-octadecenoat (Methyloleat) in einer Gesamtmenge von 10 bis 50 Gew.-%, Tenside in einer Gesamtmenge von mindestens 3 Gew.-%,
und vorzugsweise einem, zwei, drei oder mehr weiteren Bestandteilen, ausgewählt aus der Gruppe bestehend aus
anderen Herbiziden (Bestandteil (C)), vorzugsweise in einer Gesamtmenge von 0,5 bis 12 Gew.-%,
Safenern (Bestandteil (D)), vorzugsweise in einer Gesamtmenge von 0,75 bis 15 Gew.-%,
Wasser (Bestandteil (F)), vorzugsweise in einer Gesamtmenge von 0,1 bis 30 Gew.-%,
andere Formulierungshilfsstoffe (Bestandteil (H)), bevorzugt in einer Gesamtmenge von 0,1 bis 50 Gew.-%,
jeweils bezogen auf das Gesamtgewicht der Zusammensetzung.

2. Zusammensetzung nach Anspruch 1, wobei die Zusammensetzung umfasst
Bestandteil (A) in einer Gesamtmenge von 0,5 bis 5 Gew.-%,
Bestandteil (B) in einer Gesamtmenge von 20 Gew.-% bis 50 Gew.-%,
Methyl-cis-9-octadecenoat (Methyloleat) in einer Gesamtmenge von 20 bis 50 Gew.-%,
Tenside in einer Gesamtmenge von mindestens 3 Gew.-%, vorzugsweise ausgewählt aus der Gruppe bestehend aus Rizinusölethoxylaten, Alkylsulfosuccinaten und Polyethylenglykolmono(tristyrylphenyl)ethern,
und einem, zwei, drei oder mehr weiteren Bestandteilen, ausgewählt aus der Gruppe bestehend aus
anderen Herbiziden (Bestandteil (C)), vorzugsweise in einer Gesamtmenge von 0,5 bis 12 Gew.-%,
Safenern (Bestandteil (D)), vorzugsweise in einer Gesamtmenge von 0,75 bis 15 Gew.-%,
Wasser (Bestandteil (F)), vorzugsweise in einer Gesamtmenge von 0,1 bis 30 Gew.-%,
andere Formulierungshilfsstoffe (Bestandteil (H)), bevorzugt in einer Gesamtmenge von 0,1 bis 50 Gew.-%,
jeweils bezogen auf das Gesamtgewicht der Zusammensetzung.

3. Zusammensetzung nach Anspruch 1, wobei die Zusammensetzung umfasst
Bestandteil (A) in einer Gesamtmenge von 0,5 bis 4 Gew.-%,
Bestandteil (B) in einer Gesamtmenge von 20 Gew.-% bis 50 Gew.-%,
Methyl-cis-9-octadecenoat (Methyloleat) in einer Gesamtmenge von 20 bis 50 Gew.-%, nichtionische Tenside in einer Gesamtmenge von mindestens 3 Gew.-%, umfassend vorzugsweise ein nichtionisches Tensid aus der Gruppe der Rizinusölethoxylate,
ein oder mehrere ionische Tenside, ausgewählt aus der Gruppe der Sulfosuccinate, vorzugsweise Natrium-2-ethylhexylsulfosuccinat,
und einem, zwei, drei oder mehr weiteren Bestandteilen, ausgewählt aus der Gruppe bestehend aus
anderen Herbiziden (Bestandteil (C)), bevorzugt in einer Gesamtmenge von 0,5 bis 12 Gew.-%,
Safenern (Bestandteil (D)), vorzugsweise in einer Gesamtmenge von 0,75 bis 15 Gew.-%,
Wasser (Bestandteil (F)), vorzugsweise in einer Gesamtmenge von 0,1 bis 30 Gew.-%,
andere Formulierungshilfsstoffe (Bestandteil (H)), bevorzugt in einer Gesamtmenge von 0,1 bis 50 Gew.-%,
jeweils bezogen auf das Gesamtgewicht der Zusammensetzung.

4. Zusammensetzung nach Anspruch 1, wobei die Zusammensetzung umfasst
Bestandteil (A) in einer Gesamtmenge von 0,5 bis 4 Gew.-%,
Bestandteil (B) in einer Gesamtmenge von 20 Gew.-% bis 50 Gew.-%,
Methyl-cis-9-octadecenoat (Methyloleat) in einer Gesamtmenge von 20 bis 50 Gew.-%,
wobei das Gewichtsverhältnis des Bestandteils (B) zu Methyl-cis-9-octadecenoat (Methyloleat) im Bereich von 2:1 bis 1:2 liegt,
nichtionische Tenside in einer Gesamtmenge von mindestens 3 Gew.-%, wobei die nichtionischen Tenside Tenside umfassen oder aus solchen bestehen, die aus der Gruppe der Rizinusölethoxylate ausgewählt sind,
ein oder mehrere ionische Tenside, ausgewählt aus der Gruppe der Sulfosuccinate, vorzugsweise Natrium-2-ethylhexylsulfosuccinat,
wobei das Verhältnis der Gesamtmenge der nichtionischen Tenside zur Gesamtmenge der ionischen Tenside vorzugsweise im Bereich von 3 : 1 bis 1 : 3 liegt,
und einem, zwei, drei oder mehr weiteren Bestandteilen, ausgewählt aus der Gruppe bestehend aus
anderen Herbiziden (Bestandteil (C)), bevorzugt in einer Gesamtmenge von 0,5 bis 12 Gew.-%,
Safenern (Bestandteil (D)), vorzugsweise in einer Gesamtmenge von 0,75 bis 15 Gew.-%,
Wasser (Bestandteil (F)), vorzugsweise in einer Gesamtmenge von 0,1 bis 30 Gew.-%,
andere Formulierungshilfsstoffe (Bestandteil (H)), bevorzugt in einer Gesamtmenge von 0,1 bis 50 Gew.-%,
jeweils bezogen auf das Gesamtgewicht der Zusammensetzung.

5. Zusammensetzung nach Anspruch 1, wobei die Zusammensetzung umfasst
Bestandteil (A) in einer Gesamtmenge von 0,5 bis 3 Gew.-%,
Bestandteil (B) in einer Gesamtmenge von 20 Gew.-% bis 50 Gew.-%,
Methyl-cis-9-octadecenoat (Methyloleat) in einer Gesamtmenge von 20 bis 50 Gew.-%,
wobei das Gewichtsverhältnis des Bestandteils (B) zu Methyl-cis-9-octadecenoat (Methyloleat) im Bereich von 2:1 bis 1:2 liegt,
nichtionische Tenside in einer Gesamtmenge von mindestens 3 Gew.-%, wobei die nichtionischen Tenside Tenside umfassen oder aus solchen bestehen, die aus der Gruppe der Rizinusölethoxylate ausgewählt sind,
ein oder mehrere ionische Tenside, umfassend oder bestehend aus Natrium-2-ethylhexylsulfosuccinat, vorzugsweise in einer Gesamtmenge von mindestens 3 Gew.-%,
wobei das Verhältnis der Gesamtmenge der nichtionischen Tenside zur Gesamtmenge der ionischen Tenside vorzugsweise im Bereich von 2 : 1 bis 1 : 2 liegt,
und einem, zwei, drei oder mehr weiteren Bestandteilen, ausgewählt aus der Gruppe bestehend aus
anderen Herbiziden (Bestandteil (C)), bevorzugt in einer Gesamtmenge von 0,5 bis 12 Gew.-%,
Safenern (Bestandteil (D)), vorzugsweise in einer Gesamtmenge von 0,75 bis 15 Gew.-%,
Wasser (Bestandteil (F)), vorzugsweise in einer Gesamtmenge von 0,1 bis 30 Gew.-%,
andere Formulierungshilfsstoffe (Bestandteil (H)), bevorzugt in einer Gesamtmenge von 0,1 bis 50 Gew.-%,
jeweils bezogen auf das Gesamtgewicht der Zusammensetzung.

6. Zusammensetzung nach einem oder mehreren der Ansprüche 1 bis 5, wobei die Zusammensetzung frei von Pinoxaden und vorzugsweise frei von einem C₁-C₆-Alkylmethacrylat ist.

7. Zusammensetzung nach einem oder mehreren der Ansprüche 1 bis 6, wobei die Bestandteile (A) und (C) die einzigen Herbizide in dieser Zusammensetzung sind.

8. Zusammensetzung nach einem oder mehreren der Ansprüche 1 bis 7, wobei das Gewichtsverhältnis der Gesamtmenge des Bestandteils (A) zur Gesamtmenge des Bestandteils (B) im Bereich von 1 : 4 bis 1 : 60, vorzugsweise im Bereich von 1 : 4 bis 1 : 50, besonders bevorzugt im Bereich von 1 : 4 bis 1 : 40, oder im Bereich von 1 : 5 bis 1 : 30 liegt, jeweils bezogen auf das Gesamtgewicht der Zusammensetzung.

9. Zusammensetzung nach einem oder mehreren der Ansprüche 1 bis 8, wobei der Safener des Bestandteils (D) ausgewählt ist aus der Gruppe bestehend aus (D1) Mefenpyr, seinen Estern und/oder Salzen davon (vorzugsweise Mefenpyr-Diethyl), (D2) Isoxadifen, seinen Estern und/oder Salzen davon (vorzugsweise Isoxadifen-Ethyl), (D3) Cyprosulfamid, seine Ester und/oder Salze davon (vorzugsweise Cyprosulfamid), (D4) Cloquintocet, seine Ester und/oder Salze davon (vorzugsweise Cloquintocet-Mexyl), (D5) Fenchlorazol, seine Ester und/oder Salze davon (vorzugsweise Fenchlorazol), und (D6) Furilazol, seine Ester und/oder Salze davon (vorzugsweise Furilazol).

10. Tank-Mix-Zusammensetzung umfassend oder bestehend aus
Bestandteil (i) einer Zusammensetzung wie in einem oder mehreren der Ansprüche 1 bis 9 beansprucht,
Bestandteil (ii) Wasser,
und gegebenenfalls Bestandteil (iii) einem oder mehreren Fettalkoholpolyglykolethern und/oder einem oder mehreren pflanzlichen Ölen oder Estern davon (vorzugsweise Rapsölmethylester) und/oder einem oder mehreren Alkalimetalllaurylethersulfaten (vorzugsweise Natriumlaurylethersulfaten),
wobei die Gesamtgewichtsmenge des Bestandteils (ii) zur Gesamtgewichtsmenge des Bestandteils (i) vorzugsweise im Bereich von 50 : 1 bis 800 : 1, besonders bevorzugt im Bereich von 100 : 1 bis 500 : 1 liegt, jeweils bezogen auf das Gesamtgewicht der Tankmischzusammensetzung.

11. Verfahren zur Bekämpfung von Schadpflanzen, umfassend das Aufbringen der Zusammensetzung gemäß einem oder mehreren der Ansprüche 1 bis 9 oder der Tankmischungszusammensetzung gemäß Anspruch 10 auf die Pflanzen, Pflanzenteile, Pflanzensamen oder die Fläche, auf der die Pflanzen wachsen, wobei die Aufwandmenge des Bestandteils (A) vorzugsweise im Bereich von 0,5 bis 50 g/ha, besonders bevorzugt im Bereich von 1 bis 25 g/ha und besonders bevorzugt im Bereich von 2 bis 20 g/ha liegt.

12. Verfahren nach Anspruch 11 zur selektiven Bekämpfung von Schadpflanzen in Pflanzenkulturen.

13. Verwendung der in einem der Ansprüche 1 bis 9 definierten Zusammensetzung oder der in Anspruch 10 definierten Tankmischungszusammensetzung zur Bekämpfung von Schadpflanzen, wobei die Aufwandmenge des Bestandteils (A) vorzugsweise im Bereich von 0,5 bis 50 g/ha, bevorzugt im Bereich von 1 bis 25 g/ha und besonders bevorzugt im Bereich von 2 bis 20 g/ha liegt.

14. Das Verfahren gemäß einem der Ansprüche 11 oder 12 oder die Verwendung gemäß Anspruch 13, wobei die Schadpflanzen ausgewählt sind aus Alopecurus spp., Apera ssp., Avena spp., Brachiaria spp, Bromus spp., Echinochloa spp., Galium spp., Geranium spp., Lolium spp., Matricaria spp., Papaver spp., Phalaris spp., Poa spp., Polygonum spp., Setaria spp., Veronica spp. und Viola spp.

15. Verfahren zur Herstellung einer Tank-Mix Zusammensetzung, **gekennzeichnet durch** die folgenden Schritte:
(a) Bereitstellen einer in einem der Ansprüche 1 bis 9 definierten Zusammensetzung als Bestandteil (i),
(b) Bereitstellen von Wasser als Bestandteil (ii), wobei die Gesamtgewichtsmenge des Bestandteils (ii) zur Gesamtgewichtsmenge des Bestandteils (i) vorzugsweise im Bereich von 50:1 bis 800:1, noch bevorzugter im Bereich von 100:1 bis 500:1 liegt,
(c) gegebenenfalls Bereitstellung eines oder mehrerer Fettalkoholpolyglykolether und/oder mehrerer Pflanzenöle oder Ester davon (vorzugsweise Rapsölmethylester) und/oder eines oder mehrerer Alkalimetalllaurylethersulfate (vorzugsweise Natriumlaurylethersulfate) als Bestandteil (iii),
wobei die Bestandteile (i) und (ii) und gegebenenfalls der Bestandteil (iii) in einem Tank gemischt werden.

## Revendications

1. Composition comprenant une quantité efficace du constituant (A), dans laquelle
(A) désigne le mésosulfuron-méthyle et/ou un de ses sels,
(B) désigne le phosphate de tris(2-éthylhexyle) (TEHP),
et un ou plusieurs autres composés choisis parmi le groupe constitué des constituants (C) et (D) :
(C) un ou plusieurs autres herbicides choisis parmi le groupe constitué de
(C1) iodosulfuron-méthyle et ses sels, (C2) thiencarbazone-méthyle et ses sels, (C3) amidosulfuron et ses sels, (C4) foramsulfuron et ses sels, (C5) propoxycarbazone et ses sels, et (C6) diflufenican,
(D) un ou plusieurs phytoprotecteurs,
dans lequel le rapport en poids entre la quantité totale du constituant (A) et la quantité totale du constituant (B) est compris entre 1 : 2 et 1 : 100, sur la base du poids total de la composition, et dans lequel la composition comprend
le constituant (A) en une quantité totale allant de 0,5 % à 5 % en poids,
le constituant (B) en une quantité totale de 10 % à 50 % en poids,
du cis-9-octadécénoate de méthyle (oléate de méthyle) en une quantité totale de 10 % à 50 % en poids,
des tensioactifs en quantité totale d'au moins 3 % en poids,
et de préférence un, deux, trois ou plus de constituants supplémentaires choisis parmi le groupe constitué de
d'autres herbicides (constituant (C)), de préférence en une quantité totale de 0,5 % à 12 % en poids,
des phytoprotecteurs (constituant (D)), de préférence en une quantité totale allant de 0,75 % à 15 % en poids,
l'eau (constituant (F)), de préférence en une quantité totale de 0,1 % à 30 % en poids,
d'autres adjuvants de formulation (constituant (H)), de préférence en une quantité totale de 0,1 % à 50 % en poids,
dans chaque cas sur la base du poids total de la composition.

2. Composition selon la revendication 1, dans laquelle la composition comprend
le constituant (A) en une quantité totale de 0,5 % à 5 % en poids,
le constituant (B) en une quantité totale de 20 % à 50 % en poids,
du cis-9-octadécénoate de méthyle (oléate de méthyle) en une quantité totale de 20 % à 50 % en poids,
des tensioactifs en quantité totale d'au moins 3 % en poids, de préférence choisis dans le groupe constitué par les éthoxylates d'huile de ricin, les sulfosuccinates d'alkyle et les mono (tristyrylphényl) éthers de polyéthylène glycol,
et un, deux, trois ou plus de constituants supplémentaires choisis dans le groupe constitué par
d'autres herbicides (constituant (C)), de préférence en une quantité totale comprise entre 0,5 % et 12 % en poids,
des phytoprotecteurs (constituant (D)), de préférence en une quantité totale allant de 0,75 % à 15 % en poids,
l'eau (constituant (F)), de préférence en une quantité totale de 0,1 % à 30 % en poids, d'autres adjuvants de formulation (constituant (H)), de préférence en une quantité totale de 0,1 % à 50 % en poids,
dans chaque cas sur la base du poids total de la composition.

3. Composition selon la revendication 1, dans laquelle la composition comprend
le constituant (A) en une quantité totale de 0,5 % à 4 % en poids,
le constituant (B) en une quantité totale de 20 % à 50 % en poids,
du cis-9-octadécénoate de méthyle (oléate de méthyle) en une quantité totale de 20 % à 50 % en poids,
des agents de surface non ioniques en une quantité totale d'au moins 3 % en poids, comprenant de préférence un agent de surface non ionique choisi dans le groupe des éthoxylates d'huile de ricin,
un ou plusieurs agents de surface ioniques choisis dans le groupe des sulfosuccinates, de préférence le sodium-2-éthylhexylsulfosuccinate,
et un, deux, trois ou plus de constituants supplémentaires choisis dans le groupe constitué par
d'autres herbicides (constituant (C)), de préférence en une quantité totale comprise entre 0,5 % et 12 % en poids,
des phytoprotecteurs (constituant (D)), de préférence en une quantité totale allant de 0,75 % à 15 % en poids,
l'eau (constituant (F)), de préférence en une quantité totale de 0,1 % à 30 % en poids,
d'autres adjuvants de formulation (constituant (H)), de préférence en une quantité totale de 0,1 % à 50 % en poids,
dans chaque cas sur la base du poids total de la composition.

4. Composition selon la revendication 1, dans laquelle la composition comprend
le constituant (A) en une quantité totale de 0,5 % à 4 % en poids,
le constituant (B) en une quantité totale de 20 % à 50 % en poids,
le cis-9-octadécénoate de méthyle (oléate de méthyle) en une quantité totale de 20 % à 50 % en poids,
dans lequel le rapport en poids entre le constituant (B) et le cis-9-octadécénoate de méthyle (oléate de méthyle) est compris entre 2 : 1 et 1 : 2,
des agents de surface non ioniques en une quantité totale d'au moins 3 % en poids, dans lesquels lesdits agents de surface non ioniques comprennent ou sont constitués d'agents de surface choisis dans le groupe des éthoxylates d'huile de ricin,
un ou plusieurs agents de surface ioniques choisis dans le groupe des sulfosuccinates, de préférence le sodium-2-éthylhexylsulfosuccinate,
dans lequel le rapport entre la quantité totale d'agents de surface non ioniques et la quantité totale d'agents de surface ioniques est de préférence compris entre 3 : 1 et 1 : 3,
et un, deux, trois ou plus de constituants supplémentaires choisis dans le groupe constitué par
d'autres herbicides (constituant (C)), de préférence en une quantité totale allant de 0,5 % à 12 % en poids,
des phytoprotecteurs (constituant (D)), de préférence en une quantité totale allant de 0,75 % à 15 % en poids,
l'eau (constituant (F)), de préférence en une quantité totale de 0,1 % à 30 % en poids,
d'autres adjuvants de formulation (constituant (H)), de préférence en une quantité totale de 0,1 % à 50 % en poids,
dans chaque cas sur la base du poids total de la composition.

5. Composition selon la revendication 1, dans laquelle la composition comprend
le constituant (A) en une quantité totale de 0,5 % à 3 % en poids,
le constituant (B) en une quantité totale de 20 % à 50 % en poids,
le cis-9-octadécénoate de méthyle (oléate de méthyle) en une quantité totale de 20 % à 50 % en poids,
dans lequel le rapport en poids entre le constituant (B) et le cis-9-octadécénoate de méthyle (oléate de méthyle) est compris entre 2 : 1 et 1 : 2,
des agents de surface non ioniques en une quantité totale d'au moins 3 % en poids, dans lesquels lesdits agents de surface non ioniques comprennent ou sont constitués d'agents de surface choisis dans le groupe des éthoxylates d'huile de ricin,
un ou plusieurs agents de surface ioniques comprenant ou constitués de sodium-2-éthylhexylsulfosuccinate, de préférence en une quantité totale d'au moins 3 % en poids,
dans lequel le rapport entre la quantité totale d'agents de surface non ioniques et la quantité totale d'agents de surface ioniques est de préférence compris entre 2 : 1 et 1 : 2,
et un, deux, trois ou plus de constituants supplémentaires choisis dans le groupe constitué par
d'autres herbicides (constituant (C)), de préférence en une quantité totale comprise entre 0,5 % et 12 % en poids,
des phytoprotecteurs (constituant (D)), de préférence en une quantité totale allant de 0,75 % à 15 % en poids,
l'eau (constituant (F)), de préférence en une quantité totale de 0,1 % à 30 % en poids,
d'autres adjuvants de formulation (constituant (H)), de préférence en une quantité totale de 0,1 % à 50 % en poids,
dans chaque cas sur la base du poids total de la composition.

6. Composition selon une ou plusieurs des revendications 1 à 5, dans laquelle la composition est exempte de pinoxaden et, de préférence, de méthacrylate d'alkyle en C₁-C₆.

7. Composition selon l'une ou plusieurs des revendications 1 à 6, dans laquelle les constituants (A) et (C) sont les seuls herbicides de ladite composition.

8. Composition selon une ou plusieurs des revendications 1 à 7, dans laquelle le rapport en poids de la quantité totale du constituant (A) à la quantité totale du constituant (B) est compris entre 1 : 4 et 1 : 60, de préférence entre 1 : 4 et 1 : 50, plus préférentiellement entre 1 : 4 et 1 : 40, ou entre 1 : 5 et 1 : 30, dans chaque cas sur la base du poids total de la composition.

9. Composition selon une ou plusieurs des revendications 1 à 8, dans laquelle le phytoprotecteur du constituant (D) est choisi parmi le groupe constitué de (D1) méfenpyr, ses esters et/ou ses sels (de préférence méfenpyr-diéthyl), (D2) isoxadifène, ses esters et/ou ses sels (de préférence isoxadifène-éthyl), (D3) cyprosulfamide, ses esters et/ou ses sels (de préférence cyprosulfamide), (D4) cloquintocet, ses esters et/ou ses sels (de préférence cloquintocet-mexyl), (D5) fenchlorazol, ses esters et/ou ses sels (de préférence fenchlorazol), et (D6) furilazol, ses esters et/ou ses sels (de préférence furilazol).

10. Composition de mélange en réservoir comprenant : ou constituée de
constituant (i) une composition telle que revendiquée dans une ou plusieurs des revendications 1 à 9,
le constituant (ii) de l'eau,
et éventuellement le constituant (iii) un ou plusieurs éthers de polyglycol d'alcool gras et/ou une ou plusieurs huiles végétales ou leurs esters (de préférence les esters méthyliques d'huile de colza) et/ou un ou plusieurs lauryléthersulfates de métaux alcalins (de préférence les lauryléthersulfates de sodium),
dans lequel la quantité totale en poids du constituant (ii) par rapport à la quantité totale en poids du constituant (i) est de préférence comprise entre 50 : 1 et 800 : 1, plus préférentiellement entre 100 : 1 et 500 : 1, dans chaque cas par rapport au poids total de la composition du mélange en cuve.

11. Procédé de lutte contre les plantes nuisibles comprenant l'application de la composition définie dans une ou plusieurs des revendications 1 à 9 ou de la composition de mélange en cuve définie dans la revendication 10 sur les plantes, les parties de plantes, les graines de plantes ou la zone où les plantes poussent, dans lequel la dose d'application du constituant (A) est de préférence comprise entre 0,5 et 50 g/ha, de préférence entre 1 et 25 g/ha, et de préférence encore entre 2 et 20 g/ha.

12. Procédé selon la revendication 11 pour la lutte sélective contre les plantes nuisibles dans les cultures végétales.

13. Utilisation de la composition définie dans l'une quelconque des revendications 1 à 9 ou de la composition en mélange en cuve définie dans la revendication 10 pour lutter contre les plantes nuisibles, dans laquelle la dose d'application du constituant (A) est de préférence comprise entre 0,5 et 50 g/ha, plus préférentiellement entre 1 et 25 g/ha, et particulièrement préférentiellement entre 2 et 20 g/ha.

14. Procédé tel que défini dans l'une quelconque des revendications 11 ou 12 ou utilisation telle que définie dans la revendication 13, dans lequel les plantes nuisibles sont choisies parmi Alopecurus spp, Apera ssp, Avena spp, Brachiaria spp, Bromus spp, Echinochloa spp, Geranium spp, Lolium spp, Matricaria spp, Papaver spp, Phalaver spp, Bromus spp, Echinochloa spp, Galium spp, Geranium spp, Lolium spp, Matricaria spp, Papaver spp, Phalaris spp, Poa spp, Polygonum spp, Setaria spp, Veronica spp et Viola spp.

15. Procédé de préparation d'une composition de mélange en cuve, **caractérisé en ce que** les étapes suivantes :
(a) fournir comme constituant (i) une composition définie dans l'une quelconque des revendications 1 à 9,
(b) fournir comme constituant (ii) de l'eau, dans laquelle la quantité totale en poids du constituant (ii) par rapport à la quantité totale en poids du constituant (i) est de préférence comprise entre 50 : 1 et 800 : 1, plus préférentiellement entre 100 : 1 et 500 : 1,
(c) en fournissant éventuellement comme constituant (iii) un ou plusieurs éthers de polyglycol d'alcool gras et/ou plusieurs huiles végétales ou leurs esters (de préférence des esters méthyliques d'huile de colza) et/ou un ou plusieurs lauryléthersulfates de métaux alcalins (de préférence des lauryléthersulfates de sodium),
dans lequel les constituants (i) et (ii), et éventuellement le constituant (iii), sont mélangés dans un réservoir.
